# EUROPEAN PATENT APPLICATION

(11) **EP 4 841 764 A1**
(43) Date of publication of application: **18.11.2026**
(21) Application number: 24930380.1
(22) Date of filing: 14.09.2024
(51) Int. Cl.: H01M 50/202, H01M 50/289, H01M 4/13

(54) **BATTERY CELL, BATTERY, AND ELECTRIC DEVICE**

(30) Priority: 18.03.2024 CN 202420525540 U
(71) Applicant: Contemporary Amperex Technology Co., Limited, Ningde, Fujian 352100 (CN)
(72) Inventor: ZHANG, Qianqian, Ningde, Fujian 352100 (CN); XU, Liangfan, Ningde, Fujian 352100 (CN); HUANG, Weihong, Ningde, Fujian 352100 (CN); YAO, Xin, Ningde, Fujian 352100 (CN); XU, Hu, Ningde, Fujian 352100 (CN); LI, Xing, Ningde, Fujian 352100 (CN)
(74) Representative: Ziebig Hengelhaupt Intellectual Property Attorneys Patentanwaltskanzlei PartGmbB
(86) International application number: PCT/CN2024/119062
(87) International publication number: WO 2025/194720

(57) **Abstract**

The present application relates to the technical field of batteries, and provides a battery cell, a battery, and an electric device. The battery cell comprises a casing and an electrode assembly. An accommodating cavity is formed in the casing. The electrode assembly is accommodated in the accommodating cavity; the electrode assembly comprises a first electrode sheet; the first electrode sheet comprises a first main body portion and a first tab; the first main body portion is provided with a first main body area and a first thinned area arranged in a first direction; the thickness of the first thinned area is less than that of the first main body area; and the first tab is connected to the end of the first thinned area distant from the first main body area in the first direction. A thickened portion protrudes from the wall surface of the accommodating cavity; in the thickness direction of the first thinned area, at least part of the projection of the first thinned area is located in the thickened portion; and the thickness direction of the first thinned area is perpendicular to the first direction. The thickened portion can enhance the constraint of the casing on the first thinned area of the first electrode sheet, thereby mitigating excessive gaps or bending in the first thinned area of the first electrode sheet after expansion.

## Description

### CROSS-REFERENCE TO RELATED APPLICATION

The present application claims the priority of Chinese Patent Application No. 2024205255400 filed on March 18, 2024 and entitled "BATTERY CELL, BATTERY, AND ELECTRICAL APPARATUS", which is incorporated herein by reference in its entirety.

### TECHNICAL FIELD

The present application relates to the field of battery technologies, and in particular, to a battery cell, a battery, and an electrical apparatus.

### BACKGROUND

In recent years, new energy vehicles have made a leap forward in development. In the field of electric vehicles, power batteries, as power sources of electric vehicles, play an irreplaceable and important role. With the vigorous promotion of new energy vehicles, the demand for power battery products is also increasing day by day, where batteries, as core components of new energy vehicles, have relatively high requirements in terms of use reliability and service life. A battery cell of a battery generally includes a shell and an electrode assembly accommodated within the shell, and electrode terminals are provided on the shell. By electrically connecting the electrode terminals to the electrode assembly, the input or output of electric energy of the battery cell is achieved. However, the electrode assembly of the existing battery cell is prone to the phenomenon of lithium plating or increase of internal resistance during the cyclic use process, resulting in a relatively high use risk of the battery cell, and a relatively short cyclic service life, which is consequently not conducive to improving the service life and use reliability of the battery cell.

### SUMMARY OF THE INVENTION

Embodiments of the present application provide a battery cell, a battery, and an electrical apparatus, which may effectively improve the service life and use reliability of the battery cell.

In a first aspect, an embodiment of the present application provides a battery cell, including a shell and an electrode assembly, where an accommodating cavity is formed inside the shell; and the electrode assembly is accommodated within the accommodating cavity, the electrode assembly including a first electrode plate, where the first electrode plate includes a first body portion and a first tab, the first body portion being formed with a first body region and a first thinned region arranged along a first direction, where a thickness of the first thinned region is less than a thickness of the first body region, and the first tab is connected to an end of the first thinned region away from the first body region in the first direction, where a thickened portion is protrudingly provided on a cavity wall surface of the accommodating cavity, along a thickness direction of the first thinned region, at least a portion of a projection of the first thinned region being located within the thickened portion, the thickness direction of the first thinned region being perpendicular to the first direction.

In the aforementioned technical solution, the first tab of the first electrode plate of the electrode assembly is connected to the end of the first thinned region of the first body portion away from the first body region, such that a thinned structure is formed at an end of the first body portion of the first electrode plate where the first tab is provided, thereby enabling alleviation of the phenomenon of stress concentration occurring at the end of the first body portion connected to the first tab. Here, by protrudingly providing the thickened portion on the cavity wall surface of the accommodating cavity, and arranging at least a portion of the projection, in the thickness direction of the first thinned region, of the part of the first electrode plate of the electrode assembly forming the first thinned region to be located within the thickened portion, the constraint and restriction of the shell on the first thinned region of the first electrode plate of the electrode assembly are increased, thereby enabling reduction in the expandable space of the first thinned region of the first electrode plate during cyclic use, so as to alleviate the phenomenon that the first thinned region of the first electrode plate has an excessively large gap or the first electrode plate is bent after expansion, and consequently enabling alleviation of the phenomenon that the wetting effect of the electrolyte solution of the electrode assembly becomes poor during later use, so as to reduce the risk of lithium plating of the electrode assembly, and enabling alleviation of the phenomenon that the internal resistance of the electrode assembly becomes large during later use, which is conducive to improving the service life and use reliability of the battery cell.

In some embodiments, along the first direction, at least one end of the thickened portion extends beyond the first thinned region.

In the aforementioned technical solution, by arranging at least one end of the thickened portion in the first direction to extend beyond the first thinned region of the first electrode plate, the abutment effect of the thickened portion on the first thinned region is improved, thereby enabling improvement of the effect of the shell constraining and restricting the first thinned region of the first electrode plate, so as to reduce the expandable space of the first thinned region of the first electrode plate during cyclic use, and consequently enabling further alleviation of the phenomenon that the first thinned region of the first electrode plate has an excessively large gap or the first electrode plate is bent after expansion.

In some embodiments, along the first direction, both ends of the thickened portion extend beyond the first thinned region.

In the aforementioned technical solution, by setting a structure in which both ends of the thickened portion in the first direction extend beyond the first thinned region of the first electrode plate, the abutment effect of the thickened portion on the first thinned region is further improved, thereby enabling further improvement of the effect of the shell constraining and restricting the first thinned region of the first electrode plate, so as to further reduce the expandable space of the first thinned region of the first electrode plate during cyclic use, and consequently enabling further alleviation of the phenomenon that the first thinned region of the first electrode plate has an excessively large gap or the first electrode plate is bent after expansion.

In some embodiments, along the first direction, a length of the thickened portion is less than or equal to twice a length of the first thinned region.

In the aforementioned technical solution, by setting the length of the thickened portion in the first direction to be less than or equal to twice the length of the first thinned region, while achieving the constraint and restriction on the first thinned region, the space occupied by the thickened portion in the first direction may also be saved, which is conducive to reducing the difficulty of protrudingly providing the thickened portion on the cavity wall surface of the accommodating cavity, and may reduce the interference influence between the thickened portion and the first body region of the first electrode plate.

In some embodiments, a thickness of the thickened portion protruding from the cavity wall surface of the accommodating cavity is D, which satisfies 0 mm < D ≤ 5 mm.

In the aforementioned technical solution, by setting the thickness of the thickened portion protruding from the cavity wall surface of the accommodating cavity to be less than or equal to 5 mm, the phenomenon that the thickened portion occupies too much internal space of the shell is alleviated, thereby enabling improvement of the utilization rate of the internal space of the battery cell, so as to improve the energy density of the battery cell.

In some embodiments, the electrode assembly further includes a second electrode plate, the second electrode plate having a polarity opposite to that of the first electrode plate, where the second electrode plate includes a second body portion and a second tab, the second body portion being formed with a second body region and a second thinned region arranged along the first direction, where a thickness of the second thinned region is less than a thickness of the second body region, and along the first direction, the second tab is connected to an end of the second thinned region away from the second body region, and the second tab and the first tab are located at the same end of the electrode assembly, along a thickness direction of the second thinned region, at least a portion of a projection of the second thinned region being located within the thickened portion, and the thickness direction of the second thinned region being perpendicular to the first direction.

In the aforementioned technical solution, the second tab of the second electrode plate of the electrode assembly is connected to the end of the second thinned region of the second body portion away from the second body region, such that a thinned structure is also formed at an end of the second body portion of the second electrode plate where the second tab is provided, thereby enabling alleviation of the phenomenon of stress concentration occurring at the end of the second body portion connected to the second tab. Here, by arranging the second tab of the second electrode plate and the first tab of the first electrode plate at the same end of the electrode assembly in the first direction, and arranging at least a portion of the projection, in the thickness direction of the second thinned region, of the part of the second electrode plate of the electrode assembly forming the second thinned region to be located within the thickened portion, the shell may also increase, through the thickened portion, the constraint and restriction on the second thinned region of the second electrode plate of the electrode assembly, thereby enabling reduction in the expandable space of the second thinned region of the second electrode plate during cyclic use, so as to effectively alleviate the phenomenon that the second thinned region of the second electrode plate has an excessively large gap or the second electrode plate is bent after expansion, and consequently enabling further alleviation of the phenomenon that the wetting effect of the electrolyte solution of the electrode assembly becomes poor during later use, so as to further reduce the risk of lithium plating of the electrode assembly, and enabling further alleviation of the phenomenon that the internal resistance of the electrode assembly becomes large during later use, which is conducive to further improving the service life and use reliability of the battery cell.

In some embodiments, along the first direction, at least one end of the thickened portion extends beyond the second thinned region.

In the aforementioned technical solution, by arranging at least one end of the thickened portion in the first direction to extend beyond the second thinned region of the second electrode plate, the abutting effect of the thickened portion on the second thinned region is improved, thereby enabling improvement of the effect of the shell constraining and restricting the second thinned region of the second electrode plate, so as to reduce the expandable space of the second thinned region of the second electrode plate during cyclic use, and consequently enabling further alleviation of the phenomenon that the second thinned region of the second electrode plate has an excessively large gap or the second electrode plate is bent after expansion.

In some embodiments, along the first direction, both ends of the thickened portion extend beyond the second thinned region.

In the aforementioned technical solution, by setting a structure in which both ends of the thickened portion in the first direction extend beyond the second thinned region of the second electrode plate, the abutment effect of the thickened portion on the second thinned region is further improved, thereby enabling further improvement of the effect of the shell constraining and restricting the second thinned region of the second electrode plate, so as to further reduce the expandable space of the second thinned region of the second electrode plate during cyclic use, and consequently enabling further alleviation of the phenomenon that the second thinned region of the second electrode plate has an excessively large gap or the second electrode plate is bent after expansion.

In some embodiments, along the first direction, a length of the thickened portion is less than or equal to twice a length of the second thinned region.

In the aforementioned technical solution, by setting the length of the thickened portion in the first direction to be less than or equal to twice the length of the second thinned region, while achieving the constraint and restriction on the second thinned region, the space occupied by the thickened portion in the first direction may also be saved, which is conducive to reducing the difficulty of protrudingly providing the thickened portion on the cavity wall surface of the accommodating cavity, and may reduce the interference influence between the thickened portion and the second body region of the second electrode plate.

In some embodiments, along the thickness direction of the first thinned region, the projections of the first thinned region and the second thinned region at least partially overlap.

In the aforementioned technical solution, by arranging the first thinned region and the second thinned region such that the projections thereof in the thickness direction of the first thinned region at least partially overlap, the first thinned region and the second thinned region may share a portion of space in the first direction, which, on one hand, enables saving the space occupied by the first thinned region and the second thinned region in the first direction, thereby facilitating improvement of the energy density of the electrode assembly, and on the other hand, while achieving the configuration where both the first thinned region and the second thinned region are arranged corresponding to the thickened portion, also enables saving the dimension of the thickened portion in the first direction, so as to facilitate simultaneous constraint and restriction of the shell on the first thinned region and the second thinned region through the thickened portion.

In some embodiments, the electrode assembly is formed with a flat region, and the electrode assembly further includes a second electrode plate having a polarity opposite to that of the first electrode plate, where a portion of the first electrode plate in the flat region and a portion of the second electrode plate in the flat region are stacked along a second direction, and along the second direction, the shell has a first wall provided opposite to the electrode assembly, a surface of the first wall facing the electrode assembly being provided with the thickened portion, and the second direction being perpendicular to the first direction.

In the aforementioned technical solution, the electrode assembly is formed with a flat region, and the first electrode plate and the second electrode plate located in the flat region are of a structure stacked along the second direction, such that the electrode assembly is of a structure that expands relatively greatly in the second direction. Thus, by protrudingly providing the thickened portion on the second wall of the shell provided opposite to the electrode assembly along the second direction, the shell may be enabled to increase, through the thickened portion, the constraint and restriction on the first thinned region of the first electrode plate in the second direction, and the battery cell adopting such a structure may achieve the constraint and restriction, in the second direction, on the region of the first electrode plate of the electrode assembly formed with the weak structure, so as to reduce the expandable space, in the direction of relatively great expansion, of the region of the first electrode plate of the electrode assembly formed with the weak structure, thereby enabling alleviation of the phenomenon that the electrode assembly has an excessively large gap or the first electrode plate is bent after expansion, and consequently enabling reduction of the phenomenon that the wetting effect of the electrolyte solution of the electrode assembly becomes poor during later use, so as to reduce the risk of lithium plating of the electrode assembly, and enabling alleviation of the phenomenon that the internal resistance of the electrode assembly becomes large during later use.

In some embodiments, along the second direction, a projection of the first thinned region is entirely located within the thickened portion.

In the aforementioned technical solution, by arranging the projection of the first thinned region of the first electrode plate in the second direction to be entirely located within the thickened portion, such that the thickened portion is of a structure covering the first thinned region of the first electrode plate in the second direction, the thickened portion may be enabled to constrain and restrict the entirety of the weak structure formed on the first electrode plate in the direction in which the electrode assembly expands relatively greatly, so as to alleviate the phenomenon that the first thinned region of the first electrode plate is bent and deformed or has an enlarged gap due to an excessive expansion space, which is conducive to further alleviating the phenomenon of poor wetting of the electrolyte solution of the electrode assembly during use.

In some embodiments, the second electrode plate includes a second body portion and a second tab, the second body portion being formed with a second body region and a second thinned region arranged along the first direction, where a thickness of the second thinned region is less than a thickness of the second body region, and along the first direction, the second tab is connected to an end of the second thinned region away from the second body region, and the second tab and the first tab are located at the same end of the electrode assembly, where along the second direction, a projection of the second thinned region is entirely located within the thickened portion.

In the aforementioned technical solution, by arranging the projection of the second thinned region of the second electrode plate in the second direction to be entirely located within the thickened portion, such that the thickened portion is a structure covering the second thinned region of the second electrode plate in the second direction, the thickened portion may constrain and restrict the entirety of the weak structure formed on the second electrode plate in the direction where the electrode assembly expands relatively greatly, so as to alleviate the phenomenon that the second thinned region of the second electrode plate is bent and deformed or has an enlarged gap due to an excessive expansion space, which is conducive to further alleviating the phenomenon of poor wetting of the electrolyte solution of the electrode assembly during use.

In some embodiments, along the second direction, the shell has two said first walls provided opposite to each other, the two first walls being respectively located on two sides of the electrode assembly, and surfaces of the two first walls facing the electrode assembly are each provided with the thickened portion.

In the aforementioned technical solution, the shell has two first walls provided opposite to each other in the second direction, the two first walls being respectively located on two sides of the electrode assembly, and surfaces of the sides of the two first walls facing the electrode assembly are each provided with the thickened portion. The battery cell adopting such a structure may achieve abutting, on two sides in the direction where the electrode assembly expands relatively greatly, against the region of the first electrode plate of the electrode assembly formed with the weak structure, which is conducive to improving the effect of the shell constraining and restricting, through the thickened portion, the region of the first electrode plate of the electrode assembly formed with the weak structure.

In some embodiments, the electrode assembly is a wound structure, and the first electrode plate and the second electrode plate are stacked with each other and wound around an axis extending along the first direction, such that the electrode assembly is formed with the flat region and two bending regions connected to two ends of the flat region in a third direction, the first direction, the second direction, and the third direction being mutually perpendicular.

In the aforementioned technical solution, by configuring the electrode assembly as a wound structure formed by winding the first electrode plate and the second electrode plate around the axis extending along the first direction, the electrode assembly is formed, between the two bending regions, with the flat region where the first electrode plate and the second electrode plate are stacked with each other along the second direction. The structure is simple and facilitates manufacturing.

In some embodiments, the thickened portion is of an annular structure, and the thickened portion surrounds an outer side of the electrode assembly around the axis extending along the first direction.

In the aforementioned technical solution, by configuring the thickened portion as an annular structure surrounding the outer side of the electrode assembly, the thickened portion may not only constrain and restrict the first thinned region of the first electrode plate in the flat region of the electrode assembly, but also constrain and restrict the first thinned region of the first electrode plate in the bending region of the electrode assembly, which is conducive to further alleviating the phenomenon that the first thinned region of the first electrode plate is bent and deformed or has an enlarged gap during use, so as to reduce the risk of poor wetting of the electrolyte solution of the electrode assembly during use.

In some embodiments, the shell includes a case and an end cover, where the case includes a bottom wall and a side wall, the side wall being provided around a periphery of the bottom wall, along the first direction, one end of the side wall being connected to the bottom wall, and the other end enclosing an opening, and the side wall and the bottom wall jointly defining the accommodating cavity; and the end cover closes the opening, where the thickened portion is provided on a surface of the side wall facing the electrode assembly.

In the aforementioned technical solution, by arranging the opening of the case to be located at one end of the case in the first direction, such that the end cover and the bottom wall of the case are structures arranged along the first direction, and the thickened portion is provided on the surface of the side wall facing the electrode assembly, on one hand, it is made convenient to assemble the electrode assembly into the case along the first direction, so as to achieve the corresponding arrangement of the thickened portion protrudingly provided on the side wall and the thinned region of the first electrode plate, which is conducive to reducing the assembly difficulty of the battery cell, and on the other hand, it is made possible to reduce the difficulty of protrudingly providing the thickened portion on the cavity wall surface of the accommodating cavity of the shell.

In some embodiments, the side wall includes two first walls and two second walls, the two first walls being provided opposite to each other along a second direction, the two second walls being provided opposite to each other along a third direction, and one of the first walls, one of the second walls, the other of the first walls, and the other of the second walls being sequentially connected end to end, with the first direction, the second direction, and the third direction being mutually perpendicular, where an area of a surface of the first wall facing away from the electrode assembly is the largest among outer surfaces of the battery cell, and a surface of the first wall facing the electrode assembly is provided with the thickened portion.

In the aforementioned technical solution, the side wall of the case includes two first walls provided opposite to each other along the second direction and two second walls provided opposite to each other along the third direction, such that the side wall is of a rectangular parallelepiped structure. By providing the thickened portion on the surface of the first wall facing the electrode assembly, and configuring the outer surface of the first wall facing away from the electrode assembly to be the largest among the outer surfaces of the battery cell, the thickened portion is located on a side of the electrode assembly in the thickness direction of the battery cell. The battery cell adopting such a structure may achieve the constraint and restriction, in the direction of relatively great expansion, on the region of the first electrode plate of the electrode assembly formed with the weak structure, thereby enabling alleviation of the phenomenon that the electrode assembly has an excessively large gap or the first electrode plate is bent after expansion, and consequently enabling reduction of the phenomenon that the wetting effect of the electrolyte solution of the electrode assembly becomes poor during later use, so as to reduce the risk of lithium plating of the electrode assembly, and enabling alleviation of the phenomenon that the internal resistance of the electrode assembly becomes large during later use.

In some embodiments, the first electrode plate is a negative electrode plate of the electrode assembly.

In the aforementioned technical solution, by configuring the first electrode plate as the negative electrode plate of the electrode assembly, the outermost side of the electrode assembly is the first electrode plate, thereby enabling the constraint and restriction, through the thickened portion, on the first thinned region of the first electrode plate of the electrode assembly which is most prone to deformation, so as to alleviate the phenomenon that the wetting effect of the electrolyte solution of the electrode assembly becomes poor during later use, thereby enabling reduction in the risk of lithium plating of the electrode assembly, and enabling alleviation of the phenomenon that the internal resistance of the electrode assembly becomes large during later use.

In some embodiments, the thickened portion is integrally formed with the shell.

In the aforementioned technical solution, by configuring the thickened portion and the shell as an integrally formed structure, it is made conducive to improving the connection strength between the thickened portion and the shell, thereby enabling improvement of the stability and reliability of protruding provision of the thickened portion on the cavity wall surface of the accommodating cavity, so as to reduce the risk of the thickened portion falling off during use, which is conducive to improving the use reliability and stability of the battery cell.

In some embodiments, the thickened portion and the shell are separately provided and connected.

In the aforementioned technical solution, by configuring the thickened portion and the shell as separately provided structures, and configuring the thickened portion to be connected to the cavity wall surface of the accommodating cavity, in the battery cell adopting such a structure, it is made convenient to provide the thickened portion on the cavity wall surface of the accommodating cavity, which is conducive to reducing the difficulty of protrudingly providing the thickened portion on the cavity wall surface of the accommodating cavity, and facilitates replacing the thickened portion of different thicknesses.

In some embodiments, a cavity is formed inside the thickened portion.

In the aforementioned technical solution, by providing a cavity inside the thickened portion, the weight of the thickened portion may be reduced, so as to reduce the overall weight of the battery cell, which is conducive to improving the energy density of the battery cell.

In a second aspect, an embodiment of the present application further provides a battery, including the aforementioned battery cell.

In a third aspect, an embodiment of the present application further provides an electrical apparatus, including the aforementioned battery cell, the battery cell being configured to provide electric energy.

### DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a schematic structural diagram of a vehicle according to some embodiments of the present application;
Fig. 2 is an exploded structural diagram of a battery according to some embodiments of the present application;
Fig. 3 is a schematic structural diagram of a battery cell according to some embodiments of the present application;
FIG. 4 is an exploded structural diagram of a battery cell according to some embodiments of the present application;
FIG. 5 is a cross-sectional diagram of the battery cell according to some embodiments of the present application;
FIG. 6 is a partial enlarged diagram of A in the battery cell shown in FIG. 5;
FIG. 7 is a cross-sectional diagram of the electrode assembly perpendicular to a first direction according to some embodiments of the present application;
FIG. 8 is an assembly schematic diagram of the electrode assembly and a case of the battery cell according to some embodiments of the present application; and
FIG. 9 is a cross-sectional diagram of the battery cell according to still other embodiments of the present application.

Reference numerals: 1000 - vehicle; 100 - battery; 10 - box; 11 - first box body; 12 - second box body; 20 - battery cell; 21 - shell; 211 - accommodating cavity; 2111 - opening; 212 - thickened portion; 213 - case; 2131 - bottom wall; 2132 - side wall; 2132a - first wall; 2132b - second wall; 214 - end cover; 2141 - terminal hole; 22 - electrode assembly; 221 - first electrode plate; 2211 - first body portion; 2211a - first body region; 2211b - first thinned region; 2212 - first tab; 222 - second electrode plate; 2221 - second body portion; 2221a - second body region; 2221b - second thinned region; 2222 - second tab; 223 - separator; 224 - flat region; 225 - bending region; 23 - electrode terminal; 24 - first insulating member; 25 - second insulating member; 26 - sealing member; 27 - current collecting member; 28 - pressure relief mechanism; 200 - controller; 300 - motor; X - first direction; Y - second direction; Z - third direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment may be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the aforementioned terms in the present application may be understood according to specific situations.

In the present application, the term "and/or" is merely an association that describes the associated object, indicating that there may be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In the embodiments of the present application, a battery cell may be a secondary battery. The secondary battery refers to a battery cell that, after being discharged, may activate an active material by charging for continued use.

The battery cell may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, or the like, which is not limited in the examples of the present application.

The battery cell generally includes an electrode assembly. The electrode assembly includes a positive electrode, a negative electrode, and a spacer. In the charging and discharging process of the battery cell, active ions (such as lithium ions) are intercalated and de-intercalated between the positive electrode and the negative electrode in a reciprocating manner. The spacer is arranged between the positive electrode and the negative electrode, and may function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, baked carbon, carbon, nickel or titanium and the like may be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene glycol terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, the present application is not limited to these materials, and other conventional materials that may be used as positive electrode active materials for batteries may also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds.

In some embodiments, the positive electrode may adopt metal foam. The metal foam may be nickel foam, copper foam, aluminum foam, alloy foam, or the like. When the metal foam is treated as the positive electrode, the positive electrode active material may be not arranged on a surface of the metal foam, and the positive electrode active material may also be arranged. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may adopt a metal foil, metal foam or a composite current collector. For example, it is the metal foil, and aluminum or stainless steel subjected to silver surface treatment, stainless steel, copper, aluminum, nickel, carbon electrode, nickel or titanium and the like may be adopted. The metal foam may be nickel foam, copper foam, aluminum foam, alloy foam, or the like. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

As an example, the negative electrode active material may be a negative electrode active material which is known in the field and used for the battery cell. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries may also be used. One of these negative active materials may be used alone, or two or more of these positive active materials may be used in combination.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some embodiments, the spacer is a separator. There may be various types of separators, and any well-known separator with a porous structure having good chemical stability and mechanical stability may be selected.

For example, the material of the separator may include at least one of glass fiber, non-woven fabric, polyethylene, polypropylene, and polyvinylidene fluoride. The separator may be a single-layer film or a multi-layer composite film. When the separator is the multi-layer composite film, the materials of all layers may be the same or different. The spacer may be an independent component positioned between the positive electrode and the negative electrode, and may also be attached to the surfaces of the positive electrode and the negative electrode.

In some embodiments, the separator is a solid electrolyte. The solid electrolyte is arranged between the positive electrode and the negative electrode, and functions to transport ions and isolate the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into the wound structure.

In some embodiments, the electrode assembly is of a stacked structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided and arranged between any adjacent positive electrode plates or negative electrode plates.

For example, the spacers may be continuously arranged between any adjacent positive electrode plates or negative electrode plates by folding or winding.

In some implementations, the electrode assembly may be cylindrical, flat, polyprismatic, or the like.

In some implementations, the electrode assembly is provided with tabs, and the tabs may conduct current out from the electrode assembly. The tabs include a positive tab and a negative tab.

In some embodiments, the battery cell may include a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell in another shape. The prismatic battery cell includes, but is not limited to, a square-shell battery cell, a blade-shaped battery cell, and a polygon prism battery. For example, the polygon prism battery may be a hexagonal prism battery.

A battery mentioned in the embodiments of the present application refers a single physical module including one or more battery cells to provide a higher voltage and capacity.

In some embodiments, the battery may be a battery module. When there are a plurality of battery cells, the plurality of battery cells are arranged and fixed to form a battery module.

In some examples, the battery may be a battery pack. The battery pack includes a box and a battery cell. The battery cell or the battery module is accommodated in the box.

In some embodiments, the box may serve as a part of a chassis structure of the vehicle. For example, a portion of the box may become at least a portion of a vehicle floor, or a portion of the box may become at least a portion of a cross beam and a longitudinal beam of a vehicle.

In some embodiments, the battery may be an energy storage apparatus. The energy storage apparatus includes an energy storage container, an energy storage cabinet, or the like.

The battery has outstanding advantages such as high energy density, low environmental pollution, high power density, long service life, wide application range, and low self-discharge coefficient, thus being an important component for the current development of new energy. The development of battery technology needs to simultaneously consider multiple design factors, such as energy density, cycle life, discharge capacity, charge-discharge rate, and other performance parameters. Additionally, battery safety also needs to be considered.

For a general battery cell, the battery cell generally includes a shell and an electrode assembly, where the electrode assembly is disposed inside the shell, and electrode terminals are provided on the shell. By electrically connecting the electrode terminals to the electrode assembly, the input or output of electric energy of the battery cell is achieved. The electrode assembly includes a positive electrode plate, a separator, and a negative electrode plate, where the separator is disposed between the positive electrode plate and the negative electrode plate to separate the positive electrode plate and the negative electrode plate. The electrode assembly may be a wound structure formed by winding the positive electrode plate, the separator, and the negative electrode plate, or may be a stacked structure formed by stacking the positive electrode plate, the separator, and the negative electrode plate. Regions of the positive electrode plate and the negative electrode plate correspondingly coated with an active material layer form a body of the electrode assembly, the body being the main part of the electrode assembly where an electrochemical reaction occurs inside the shell, while regions of the positive electrode plate and the negative electrode plate not coated with the active material layer respectively form a positive tab and a negative tab, the positive tab and the negative tab being respectively used for being electrical connection with two electrode terminals, so as to output or input the positive electrode and the negative electrode of the battery cell. In the related art, in order to alleviate the phenomenon of stress concentration occurring at edges of ends of the positive electrode plate and the negative electrode plate where the tabs are formed, the active material layer at the end of the positive electrode plate where the positive tab is formed is usually thinned, so as to form a thinned region at the end of the positive electrode plate connected to the positive tab, and the active material layer at the end of the negative electrode plate where the negative tab is formed is thinned, so as to form a thinned region at the end of the positive electrode plate connected to the positive tab, thereby enabling alleviation of the phenomenon of stress concentration occurring in the active material layer at the ends of the electrode plates where the tabs are formed, such that after the positive electrode plate and the negative electrode plate are wound or stacked to form the electrode assembly, a weak region with a relatively large gap is formed at the ends of the body connected to the tabs. However, the battery cell of such a structure causes the weak region of the body of the electrode assembly to receive relatively small constraint force and restriction force from the shell, and the expansion space corresponding to the weak region is relatively large, such that during the cyclic use of the battery cell, the weak region of the body of the electrode assembly is prone to the phenomenon of electrode plate bending due to excessive expansion, especially the outermost electrode plate of the electrode assembly, which easily causes the gap between the electrode plates in the weak region of the body of the electrode assembly to be relatively large, resulting in the wetting effect of the electrolyte solution of the electrode assembly becoming poor during later use, and consequently making the electrode assembly prone to risks such as increased internal resistance or lithium plating due to poor wetting of the electrolyte solution, which is not conducive to improving the use reliability and service life of the battery cell.

Based on the above considerations, in order to solve the problems of relatively low use reliability and relatively short service life of the battery cell, an embodiment of the present application provides a battery cell, the battery cell including a shell and an electrode assembly. An accommodating cavity is formed inside the shell. The electrode assembly is accommodated within the accommodating cavity, the electrode assembly including a first electrode plate, where the first electrode plate includes a first body portion and a first tab, the first body portion being formed with a first body region and a first thinned region arranged along a first direction, where a thickness of the first thinned region is less than a thickness of the first body region, and the first tab is connected to an end of the first thinned region away from the first body region in the first direction. A thickened portion is protrudingly provided on a cavity wall surface of the accommodating cavity, along a thickness direction of the first thinned region, at least a portion of a projection of the first thinned region being located within the thickened portion, and the thickness direction of the first thinned region being perpendicular to the first direction.

In the battery cell of such a structure, the first tab of the first electrode plate of the electrode assembly is connected to the end of the first thinned region of the first body portion away from the first body region, such that a thinned structure is formed at an end of the first body portion of the first electrode plate where the first tab is provided, thereby enabling alleviation of the phenomenon of stress concentration occurring at the end of the first body portion connected to the first tab. Here, by protrudingly providing the thickened portion on the cavity wall surface of the accommodating cavity, and arranging at least a portion of the projection, in the thickness direction of the first thinned region, of the part of the first electrode plate of the electrode assembly forming the first thinned region to be located within the thickened portion, the constraint and restriction of the shell on the first thinned region of the first electrode plate of the electrode assembly are increased, thereby enabling reduction in the expandable space of the first thinned region of the first electrode plate during cyclic use, so as to alleviate the phenomenon that the first thinned region of the first electrode plate has an excessively large gap or the first electrode plate is bent after expansion, and consequently enabling alleviation of the phenomenon that the wetting effect of the electrolyte solution of the electrode assembly becomes poor during later use, so as to reduce the risk of lithium plating of the electrode assembly, and enabling alleviation of the phenomenon that the internal resistance of the electrode assembly becomes large during later use, which is conducive to improving the service life and use reliability of the battery cell.

The battery cell disclosed in the embodiments of the present application may be used in, but is not limited to, electrical apparatuses such as vehicles, ships, or aircrafts. A power supply system of the electrical apparatus may be formed by using the battery cell, the battery, or the like, disclosed in the present application, which is conducive to alleviating the problems of increased internal resistance or lithium plating occurring in the electrode assembly during use, so as to the use reliability and service life of the battery cell.

An embodiment of the present application provides an electrical apparatus with a battery used as a power source. The electrical apparatus may be, but is not limited to, a mobile phone, a tablet, a laptop, an electric toy, an electric tool, a storage battery car, an electric vehicle, a ship, a spacecraft, or the like. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

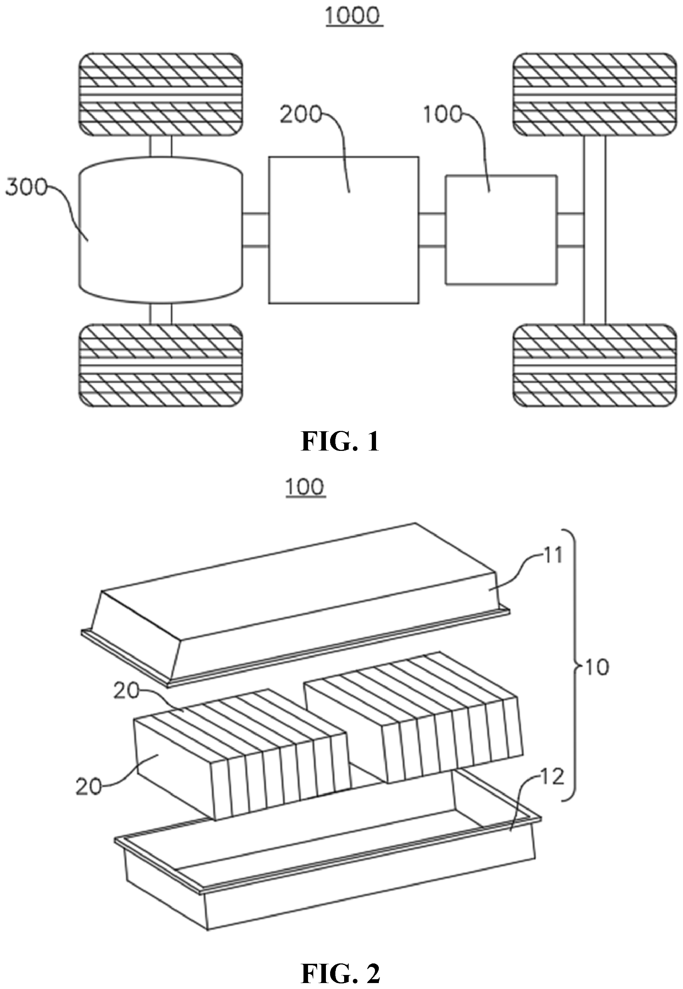

Reference is made to FIG. 1, where FIG. 1 is a schematic structural diagram of a vehicle 1000 according to some embodiments of the present application. The vehicle 1000 may be a fuel vehicle, a gas vehicle, or a new energy vehicle. The new energy vehicle may be an all-electric vehicle, a hybrid vehicle, an extended-range vehicle, or the like. A battery 100 is provided in the vehicle 1000. The battery 100 may be arranged at the bottom of the vehicle 1000, or the head of the vehicle 1000, or the tail of the vehicle 1000. The battery 100 may be configured to supply power to the vehicle 1000. For example, the battery 100 may be used as an operating power source or usage power source for the vehicle 1000. The vehicle 1000 may further include a controller 200 and a motor 300. The controller 200 is used for controlling the battery 100 to supply power to the motor 300, for example, to satisfy the operating power demand when the vehicle 1000 is starting, navigating, and traveling.

In some embodiments of the present application, the battery 100 may not only be used as the operating power source or usage power source for the vehicle 1000, but also as the driving power source for the vehicle 1000 to replace or partially replace fuel or natural gas to provide driving power for the vehicle 1000.

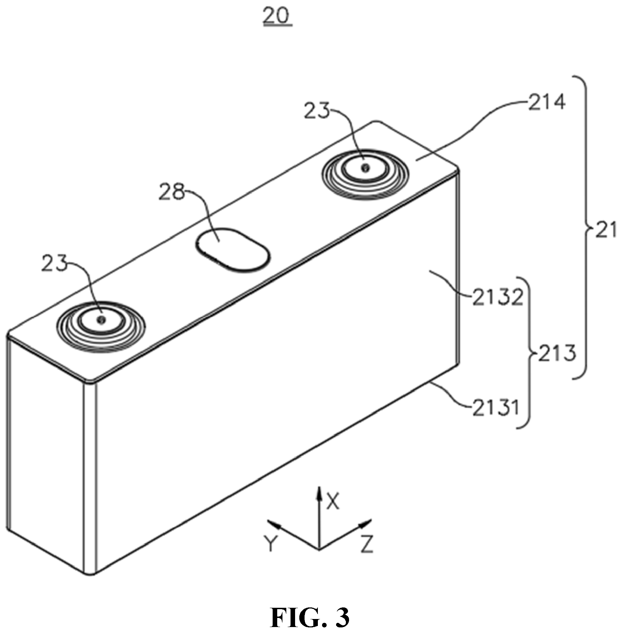

Reference is made to FIG. 2 and FIG. 3, where FIG. 2 is an exploded structural diagram of a battery 100 according to some embodiments of the present application, and FIG. 3 is a schematic structural diagram of a battery cell 20 according to some embodiments of the present application. The battery 100 includes a box 10 and a battery cell 20, and the battery cell 20 is accommodated within the box 10.

The box 10 is configured to provide an assembly space for the battery cells 20, and the box 10 may be of various structures. In some embodiments, the box 10 includes a first box body 11 and a second box body 12. The first box body 11 and the second box body 12 cover each other, and the first box body 11 and the second box body 12 together define an assembly space for accommodating the battery cell 20. The second box body 12 may be of a hollow structure with an open end, the first box body 11 may be of a plate-shaped structure, and the first box body 11 covers the open side of the second box body 12, such that the first box body 11 and the second box body 12 together define the assembly space. Each of the first box body 11 and the second box body 12 may also be of a hollow structure with an open side, and the open side of the first box body 11 covers the open side of the second box body 12.

Of course, the box 10 formed by the first box body 11 and the second box body 12 may be in various shapes, such as a cylinder, a cuboid, or a cube. As an example, in FIG. 2, the box 10 is in a cuboid shape.

In the battery 100, one battery cell 20 or a plurality of battery cells 20 may be arranged in the box 10. If a plurality of battery cells 20 are arranged in the box 10, the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated within the box 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated within the box 10.

In some embodiments, the battery 100 may further include other structures. For example, the battery 100 may further include a convergence component, and the plurality of battery cells 20 may be connected through the convergence component so as to achieve electrical connection between the plurality of battery cells 20.

Each battery cell 20 may be a secondary battery or a primary battery, and may also be a lithium-sulfur battery, a sodium-ion battery or a magnesium-ion battery, but not limited thereto. The battery cell 20 may be in a cuboid shape, a cylinder shape, a prism shape or other shapes. As an example, in FIG. 3, the battery cell 20 is of a rectangular parallelepiped structure.

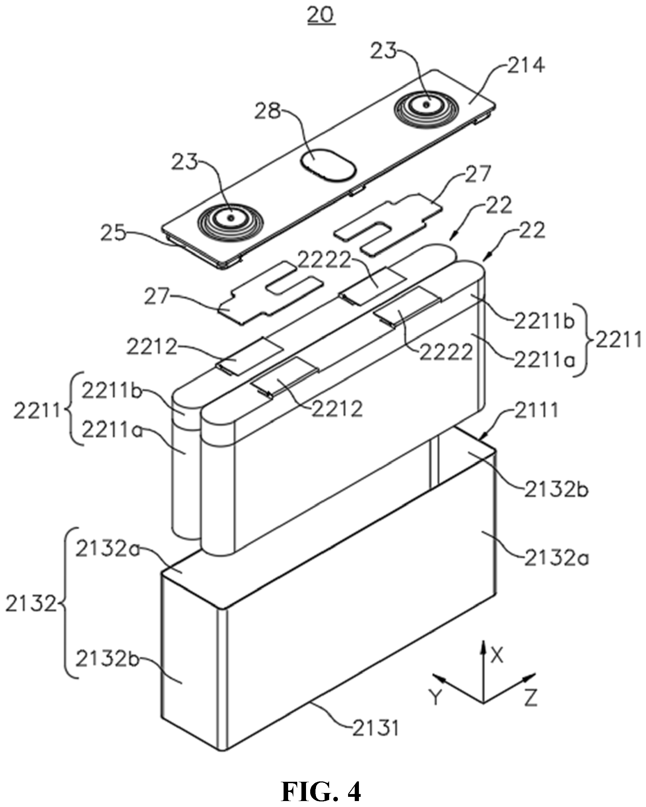

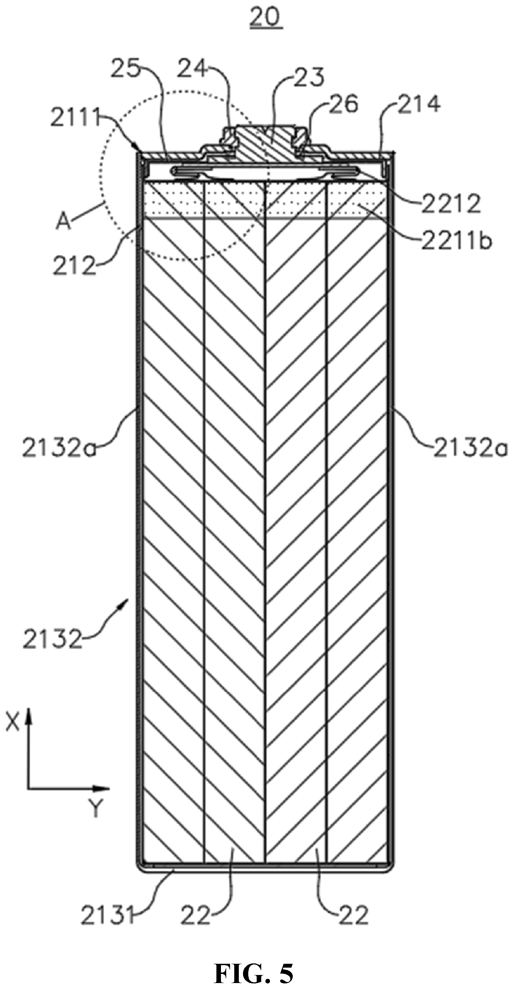

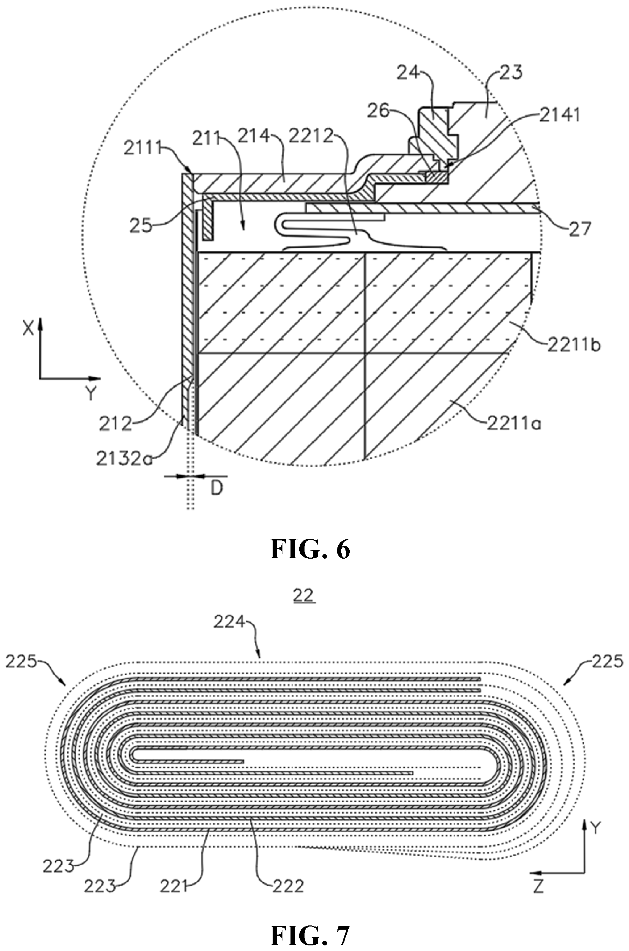

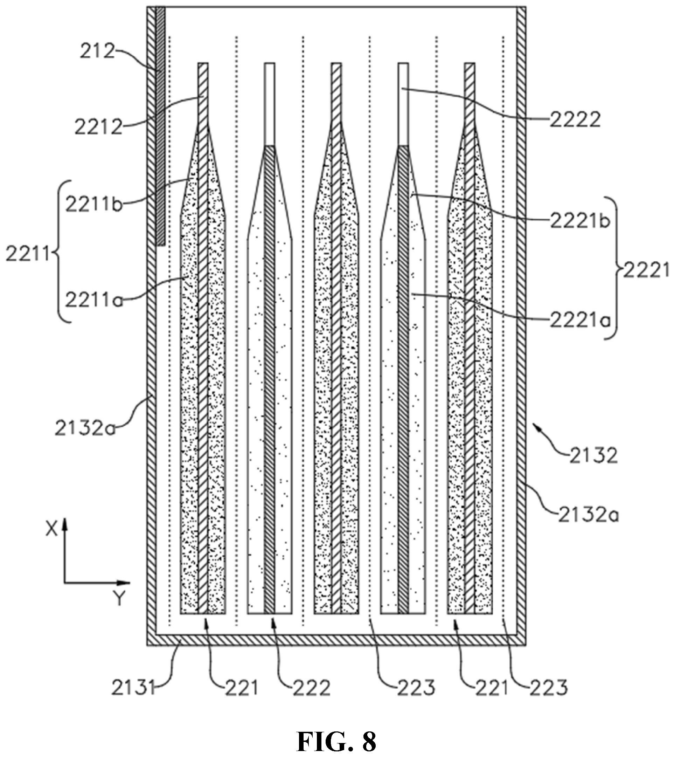

According to some embodiments of the present application, reference is made to FIG. 3, and further reference is made to FIG. 4, FIG. 5, FIG. 6, FIG. 7, and FIG. 8, where FIG. 4 is an exploded structural diagram of a battery cell 20 according to some embodiments of the present application, FIG. 5 is a cross-sectional diagram of the battery cell 20 according to some embodiments of the present application, FIG. 6 is a partial enlarged diagram of A in the battery cell 20 shown in FIG. 5, FIG. 7 is a cross-sectional diagram of the electrode assembly 22 perpendicular to a first direction X according to some embodiments of the present application, and FIG. 8 is an assembly schematic diagram of the electrode assembly 22 and a case 213 of the battery cell 20 according to some embodiments of the present application. The present application provides a battery cell 20, the battery cell 20 including a shell 21 and an electrode assembly 22. An accommodating cavity 211 is formed inside the shell 21. The electrode assembly 22 is accommodated within the accommodating cavity 211, the electrode assembly 22 including a first electrode plate 221, where the first electrode plate 221 includes a first body portion 2211 and a first tab 2212, the first body portion 2211 being formed with a first body region 2211a and a first thinned region 2211b arranged along a first direction X, where a thickness of the first thinned region 2211b is less than a thickness of the first body region 2211a, and the first tab 2212 is connected to an end of the first thinned region 2211b away from the first body region 2211a in the first direction X. A thickened portion 212 is protrudingly provided on a cavity wall surface of the accommodating cavity 211, along a thickness direction of the first thinned region 2211b, at least a portion of a projection of the first thinned region 2211b being located within the thickened portion 212, and the thickness direction of the first thinned region 2211b being perpendicular to the first direction X.

The shell 21 may further be used for accommodating an electrolyte, such as an electrolyte solution. The shell 21 may have various structural forms, such as a cylinder or a cuboid. Likewise, the shell 21 may also be made of various materials, such as copper, iron, aluminum, steel, or aluminum alloy.

In some embodiments, the shell 21 may include a case 213 and an end cover 214, where the accommodating cavity 211 is formed inside the case 213, the accommodating cavity 211 being used for accommodating the electrode assembly 22, and the accommodating cavity 211 having an opening 2111. That is to say, the case 213 is of a hollow structure with the opening 2111 at one end, and the end cover 214 covers the opening 2111 of the case 213 and forms a sealed connection, so as to form a sealed space for accommodating the electrode assembly 22 and the electrolyte. As an example, the opening 2111 is provided at one end of the case 213 in the first direction X.

The case 213 includes an integrally formed bottom wall 2131 and side wall 2132, the side wall 2132 being provided around a periphery of the bottom wall 2131, one end of the side wall 2132 in the first direction X being connected to the bottom wall 2131, and the other end enclosing the opening 2111 for the end cover 214 to cover, and the side wall 2132 and the bottom wall 2131 enclosing the accommodating cavity 211 for accommodating the electrode assembly 22.

As an example, in FIG. 3, FIG. 4, and FIG. 5, the case 213 is rectangular parallelepiped-shaped, the side wall 2132 of the case 213 includes two first walls 2132a and two second walls 2132b, the two first walls 2132a being provided opposite to each other along a second direction Y, the two second walls 2132b being provided opposite to each other along a third direction Z, and one of the first walls 2132a, one of the second walls 2132b, the other of the first walls 2132a, and the other of the second walls 2132b being sequentially connected end to end, with the first direction X, the second direction Y, and the third direction Z being mutually perpendicular.

The thickened portion 212 is protrudingly provided on the cavity wall surface of the accommodating cavity 211, and the thickened portion 212 is arranged corresponding to the first thinned region 2211b of the first electrode plate 221. The thickened portion 212 may be protrudingly provided on the first wall 2132a, or may be protrudingly provided on the second wall 2132b, or the thickened portion 212 may be protrudingly provided on both the first wall 2132a and the second wall 2132b, i.e., the thickened portion 212 is an annular structure surrounding an outer side of the electrode assembly 22. Of course, in other embodiments, if the arrangement direction of the first body region 2211a and the first thinned region 2211b of the first body portion 2211 is of a structure mutually perpendicular to the first direction X, i.e., the electrode assembly 22 is of a structure lying flat inside the case 213, the thickened portion 212 may also be protrudingly provided on the end cover 214 or the bottom wall 2131. It should be noted that, if the case 213 is cylindrical, i.e., the side wall 2132 of the case 213 is of a cylindrical structure extending along the first direction X, the thickened portion 212 may be of an annular structure surrounding the outer side of the electrode assembly 22, or may be an arc-shaped structure extending along a circumferential direction of the side wall 2132.

When assembling the battery cell 20, the electrode assembly 22 may be first placed into the case 213, and the electrolyte solution is filled into the case 213, and then the end cover 214 covers the opening 2111 of the case 213, so as to complete the assembly of the battery cell 20.

The case 213 may be of various shapes, for example, a cylinder, a rectangular parallelepiped, or a prismatic structure, or the like. The shape of the case 213 may be determined according to the specific shape of the electrode assembly 22. For example, if the electrode assembly 22 is of a cylindrical structure, a case 213 of a cylindrical structure may be selected; if the electrode assembly 22 is of a rectangular parallelepiped structure, a case 213 of a rectangular parallelepiped structure may be selected. Of course, the end cover 214 may also be of various structures, for example, the end cover 214 is of a plate-shaped structure or a hollow structure with one end open, or the like. As an example, in FIG. 3, the case 213 is of a rectangular parallelepiped structure, and the end cover 214 is of a plate-shaped structure.

Of course, it can be understood that the shell 21 is not limited to the aforementioned structures, and the shell 21 may also be of other structures. For example, the shell 21 may include the case 213 and two end covers 214, where the case 213 is of a hollow structure with openings 2111 on two opposite sides, and one end cover 214 correspondingly covers one opening 2111 of the case 213 and forms a sealed connection, so as to form a sealed space for accommodating the electrode assembly 22 and the electrolyte. That is to say, the case 213 is formed with the openings 2111 on both of the two opposite sides, and the two end covers 214 respectively cover the two sides of the case 213, so as to close the corresponding openings 2111.

In some embodiments, referring to FIG. 3 and FIG. 4, the battery cell 20 may further include two electrode terminals 23, the two electrode terminals 23 both functioning to be electrically connected to the electrode assembly 22, so as to cooperate to output or input the electric energy of the battery cell 20.

As an example, the electrode terminals 23 may be made of various materials, for example, the material of the electrode terminals 23 may be copper, iron, aluminum, steel, or aluminum alloy, or the like.

It should be noted that the two electrode terminals 23 are both insulatingly mounted on the end cover 214, that is to say, neither of the two electrode terminals 23 forms an electric connection with the end cover 214 of the shell 21. Of course, in other embodiments, the two electrode terminals 23 may also both be provided on the case 213 of the shell 21, or one electrode terminal 23 of the two electrode terminals 23 is provided on the end cover 214, and the other electrode terminal 23 is provided on the case 213.

Referring to FIG. 5 and FIG. 6, the end cover 214 is provided with a terminal hole 2141, the terminal hole 2141 penetrates through two sides of the end cover 214 along the first direction X, and the electrode terminal 23 is inserted in the terminal hole 2141 along the first direction X, so as to facilitate the electrical connection between the electrode terminal 23 and the tab of the electrode assembly 22.

The battery cell 20 may further include two first insulating members 24 and a second insulating member 25, the first insulating members 24 being arranged in one-to-one correspondence with the electrode terminals 23, at least a portion of the first insulating member 24 being disposed between the electrode terminal 23 and a hole wall surface of the terminal hole 2141, the second insulating member 25 being disposed on a side of the end cover 214 facing the electrode assembly 22, and at least a portion of the second insulating member 25 being located between the electrode terminal 23 and the end cover 214, the first insulating member 24 and the second insulating member 25 being configured to cooperate to insulate and isolate the electrode terminal 23 and the end cover 214, so as to achieve the insulated mounting of the electrode terminal 23 on the end cover 214.

As an example, the first insulating member 24 and the second insulating member 25 may be made of various material, for example, rubber, silica gel, or plastic, or the like.

In FIG. 5 and FIG. 6, the battery cell 20 may further include two sealing members 26, the sealing members 26 being arranged in one-to-one correspondence with the electrode terminals 23, the sealing member 26 being disposed between the end cover 214 and the electrode terminal 23, and the sealing member 26 being configured to seal a gap between the electrode terminal 23 and the hole wall surface of the terminal hole 2141.

As an example, the material of the sealing member 26 may be rubber, silica gel, or plastic, or the like.

It should be noted that the electrode assembly 22 is a component where an electrochemical reaction occurs in the battery cell 20, and the electrode assembly 22 may include a first electrode plate 221, a second electrode plate 222, and a separator 223, the first electrode plate 221 and the second electrode plate 222 having opposite polarities, and the separator 223 being disposed between the first electrode plate 221 and the second electrode plate 222, so as to insulate and isolate the first electrode plate 221 and the second electrode plate 222. The electrode assembly 22 may be of various structures, for example, the electrode assembly 22 may be of a wound structure formed by winding the first electrode plate 221, the separator 223, and the second electrode plate 222, or may be of a stacked structure formed by stacking the first electrode plate 221, the separator 223, and the second electrode plate 222. As an example, in FIG. 7, the electrode assembly 22 is of a wound structure formed by winding the first electrode plate 221, the separator 223, and the second electrode plate 222, and a winding central axis of the electrode assembly 22 extends along the first direction X, such that the electrode assembly 22 is formed with a flat region 224 and two bending regions 225 connected to two ends of the flat region 224 in the third direction Z. It should be noted that a portion of the first electrode plate 221 located within the flat region 224 and a portion of the second electrode plate 222 located within the flat region 224 are alternately stacked along the second direction Y.

Here, the first electrode plate 221 and the second electrode plate 222 have opposite polarities, i.e., the first electrode plate 221 and the second electrode plate 222 are respectively the positive and negative electrode plates of the electrode assembly 22. As an example, in FIG. 7, the first electrode plate 221 is the negative electrode plate of the electrode assembly 22, such that the outermost turn of the electrode assembly 22 of the wound structure is the first electrode plate 221, and correspondingly, the second electrode plate 222 is the positive electrode plate of the electrode assembly 22. Of course, in other embodiments, the first electrode plate 221 is the positive electrode plate of the electrode assembly 22, and correspondingly, the second electrode plate 222 is the negative electrode plate of the electrode assembly 22.

As an example, the separator 223 is a separator membrane, and the main material of the separator membrane may be selected as at least one of glass fiber, non-woven fabric, polyethylene, polypropylene, and polyvinylidene fluoride.

Optionally, one or a plurality of electrode assemblies 22 may be accommodated in the shell 21. As an example, in FIG. 4, the shell 21 of the battery cell 20 is provided with two electrode assemblies 22, where the two electrode assemblies 22 are stacked along a thickness direction thereof, that is to say, the two electrode assemblies 22 are stacked along the second direction Y. The first direction X is a height direction of the battery cell 20, the second direction Y is a thickness direction of the battery cell 20, and the third direction Z is a length direction of the battery cell 20. Of course, in other embodiments, the number of the electrode assemblies 22 accommodated in the shell 21 may also be one, three, four, five, six, seven, eight, or the like.

In the embodiments of the present application, referring to FIG. 8, the first electrode plate 221 includes a first body portion 2211 and a first tab 2212. The first body portion 2211 is a main component where an electrochemical reaction of the first electrode plate 221 occurs in the battery cell 20, and the first tab 2212 is used for being electrically connected to one electrode terminal 23 of the two electrode terminals 23, so as to function to input or output electric energy of the first electrode plate 221. The first tab 2212 is a component formed by mutually stacking and connecting regions of the first electrode plate 221 not coated with an active material layer. If the first electrode plate 221 is the negative electrode plate of the electrode assembly 22, the first tab 2212 is the negative tab of the electrode assembly 22; if the first electrode plate 221 is the positive electrode plate of the electrode assembly 22, the first tab 2212 is the positive tab of the electrode assembly 22. Similarly, the second electrode plate 222 includes a second body portion 2221 and a second tab 2222. The second body portion 2221 is a main component where an electrochemical reaction of the second electrode plate 222 occurs in the battery cell 20, and the second tab 2222 is used for being electrically connected to the other electrode terminal 23 of the two electrode terminals 23, so as to function to input or output electric energy of the second electrode plate 222. The second tab 2222 is a component formed by mutually stacking and connecting regions of the second electrode plate 222 not coated with the active material layer. If the second electrode plate 222 is the positive electrode plate of the electrode assembly 22, the second tab 2222 is the positive tab of the electrode assembly 22; if the second electrode plate 222 is the negative electrode plate of the electrode assembly 22, the second tab 2222 is the negative tab of the electrode assembly 22.

As an example, in FIG. 4 and FIG. 8, the first tab 2212 is connected to an end of the first body portion 2211 facing the end cover 214 in the first direction X, i.e., in the first direction X, the first tab 2212 is located between the first body portion 2211 and the end cover 214, so as to facilitate the electrical connection between the first tab 2212 and one electrode terminal 23 of the two electrode terminals 23. Similarly, the second tab 2222 is connected to an end of the second body portion 2221 facing the end cover 214 in the first direction X, i.e., in the first direction X, the second tab 2222 is located between the second body portion 2221 and the end cover 214, so as to facilitate the electrical connection between the second tab 2222 and the other electrode terminal 23 of the two electrode terminals 23.

The first body portion 2211 is formed with a first body region 2211a and a first thinned region 2211b arranged along the first direction X, where a thickness of the first thinned region 2211b is less than a thickness of the first body region 2211a, and the first tab 2212 is connected to an end of the first thinned region 2211b away from the first body region 2211a in the first direction X. That is to say, referring to FIG. 8, an end of the first body portion 2211 connected to the first tab 2212 in the first direction X is formed with a region where the active material layer is thinned. This region is the first thinned region 2211b of the first body portion 2211, while a region where the active material layer is not thinned is the first body region 2211a of the first body portion 2211, such that the thickness of the first body region 2211a is greater than the thickness of the first thinned region 2211b, and the first body region 2211a, the first thinned region 2211b, and the first tab 2212 are of a structure sequentially arranged along the first direction X.

A thickened portion 212 is protrudingly provided on a cavity wall surface of the accommodating cavity 211, i.e., the thickened portion 212 is provided on an inner surface of the shell 21 facing the electrode assembly 22.

Along a thickness direction of the first thinned region 2211b, at least a portion of a projection of the first thinned region 2211b is located within the thickened portion 212. That is to say, in the thickness direction of the first thinned region 2211b, the projection of the first thinned region 2211b at least partially overlaps with a projection of the thickened portion 212, such that the thickened portion 212 covers at least a portion of the first thinned region 2211b in the thickness direction of the first thinned region 2211b. That is to say, when the first thinned region 2211b of the first electrode plate 221 expands, the first thinned region 2211b may directly abut or indirectly abut against at least a portion of the thickened portion 212 in its thickness direction.

It should be noted that the thickness direction of the first thinned region 2211b is also the thickness direction of the first electrode plate 221. If the electrode assembly 22 is of a stacked structure formed by alternately stacking the first electrode plate 221 and the second electrode plate 222 in sequence, the thickness direction of the first thinned region 2211b is a stacking direction of the first electrode plate 221 and the second electrode plate 222, and is also the thickness direction of the electrode assembly 22; if the electrode assembly 22 is of a wound structure formed by winding the first electrode plate 221 and the second electrode plate 222, the thickness of the first thinned region 2211b is a radial direction of the electrode assembly 22, i.e., in a plane perpendicular to the first direction X, a direction in which a winding central axis of the electrode assembly 22 points to an outer edge of the electrode assembly 22, or a direction in which the outer edge of the electrode assembly 22 points to the winding central axis of the electrode assembly 22.

Optionally, the first tab 2212 of the first electrode plate 221 may be directly connected to one electrode terminal 23 of the two electrode terminals 23, for example, by welding or abutting, or the like, or may be indirectly connected through other components. Similarly, the second tab 2222 of the second electrode plate 222 may be directly connected to the other electrode terminal 23 of the two electrode terminals 23, for example, by welding or abutting, or the like, or may be indirectly connected through other components.

In some embodiments, referring to FIG. 4, FIG. 5, and FIG. 6, the battery cell 20 may further include two current collecting members 27, where the two current collecting members 27 are both disposed inside the shell 21, one current collecting member 27 connects the first tab 2212 of the first electrode plate 221 with one electrode terminal 23, and the other current collecting member 27 connects the second tab 2222 of the second electrode plate 222 with the other electrode terminal 23, so as to achieve the electrical connection between the electrode assembly 22 and the two electrode terminals 23.

As an example, the current collecting members 27 may be made of various materials, for example, copper, iron, aluminum, steel, or aluminum alloy, or the like.

In some embodiments, referring to FIG. 3 and FIG. 4, the battery cell 20 may further include a pressure relief mechanism 28, where the pressure relief mechanism 28 is disposed on the end cover 214, and the pressure relief mechanism 28 is used for releasing internal pressure of the battery cell 20 when the internal pressure or temperature of the battery cell 20 reaches a predetermined value. Of course, in other embodiments, the pressure relief mechanism 28 may also be disposed on the case 213.

Optionally, the pressure relief mechanism 28 and the end cover 214 may be of an integrally formed structure, or may be of separately provided structures. As an example, in FIG. 4, the pressure relief mechanism 28 and the end cover 214 are of a separate structure, and the pressure relief mechanism 28 may be connected to the end cover 214 by means of welding, or the like. Correspondingly, the pressure relief mechanism 28 may be a pressure relief component such as an explosion-proof valve, an explosion-proof sheet, a gas valve, a pressure relief valve, or a safety valve. Of course, in other embodiments, the pressure relief mechanism 28 and the end cover 214 may also be of an integrally formed structure, and the pressure relief mechanism 28 is a region of the end cover 214 formed with a weak structure, for example, a region of the end cover 214 provided with a score groove.

In this embodiment, the first tab 2212 of the first electrode plate 221 of the electrode assembly 22 is connected to the end of the first thinned region 2211b of the first body portion 2211 away from the first body region 2211a, such that a thinned structure is formed at an end of the first body portion 2211 of the first electrode plate 221 where the first tab 2212 is provided, thereby enabling alleviation of the phenomenon of stress concentration occurring at the end of the first body portion 2211 connected to the first tab 2212. Here, by protrudingly providing the thickened portion 212 on the cavity wall surface of the accommodating cavity 211, and arranging at least a portion of the projection, in the thickness direction of the first thinned region 2211b, of the part of the first electrode plate 221 of the electrode assembly 22 forming the first thinned region 2211b to be located within the thickened portion 212, the constraint and restriction of the shell 21 on the first thinned region 2211b of the first electrode plate 221 of the electrode assembly 22 are increased, thereby enabling reduction in the expandable space of the first thinned region 2211b of the first electrode plate 221 during cyclic use, so as to alleviate the phenomenon that the first thinned region 2211b of the first electrode plate 221 has an excessively large gap or the first electrode plate 221 is bent after expansion, and consequently enabling alleviation of the phenomenon that the wetting effect of the electrolyte solution of the electrode assembly 22 becomes poor during later use, so as to reduce the risk of lithium plating of the electrode assembly 22, and enabling alleviation of the phenomenon that the internal resistance of the electrode assembly 22 becomes large during later use, which is conducive to improving the service life and use reliability of the battery cell 20.

According to some embodiments of the present application, referring to FIG. 6 and FIG. 8, along the first direction X, at least one end of the thickened portion 212 extends beyond the first thinned region 2211b. That is to say, the thickened portion 212 may have only one end extending beyond the first thinned region 2211b in the first direction X, or both ends extending beyond the first thinned region 2211b in the first direction X.

If the thickened portion 212 is of a structure where only one end extends beyond the first thinned region 2211b in the first direction X, it may be that an end of the thickened portion 212 close to the opening 2111 in the first direction X extends beyond the first thinned region 2211b, or an end of the thickened portion 212 away from the opening 2111 in the first direction X extends beyond the first thinned region 2211b.

In this embodiment, by arranging at least one end of the thickened portion 212 in the first direction X to extend beyond the first thinned region 2211b of the first electrode plate 221, the abutment effect of the thickened portion 212 on the first thinned region 2211b is improved, thereby enabling improvement of the effect of the shell 21 constraining and restricting the first thinned region 2211b of the first electrode plate 221, so as to reduce the expandable space of the first thinned region 2211b of the first electrode plate 221 during cyclic use, and consequently enabling further alleviation of the phenomenon that the first thinned region 2211b of the first electrode plate 221 has an excessively large gap or the first electrode plate 221 is bent after expansion.

In some embodiments, please continue to refer to FIG. 6 and FIG. 8, along the first direction X, both ends of the thickened portion 212 extend beyond the first thinned region 2211b. That is to say, both ends of the first thinned region 2211b in the first direction X are located between both ends of the thickened portion 212 in the first direction X.

In this embodiment, by setting a structure in which both ends of the thickened portion 212 in the first direction X extend beyond the first thinned region 2211b of the first electrode plate 221, the abutment effect of the thickened portion 212 on the first thinned region 2211b is further improved, thereby enabling further improvement of the effect of the shell 21 constraining and restricting the first thinned region 2211b of the first electrode plate 221, so as to further reduce the expandable space of the first thinned region 2211b of the first electrode plate 221 during cyclic use, and consequently enabling further alleviation of the phenomenon that the first thinned region 2211b of the first electrode plate 221 has an excessively large gap or the first electrode plate 221 is bent after expansion.

According to some embodiments of the present application, referring to FIG. 6, along the first direction X, a length of the thickened portion 212 is less than or equal to twice a length of the first thinned region 2211b.

In this embodiment, by setting the length of the thickened portion 212 in the first direction X to be less than or equal to twice the length of the first thinned region 2211b, while achieving the constraint and restriction on the first thinned region 2211b, the space occupied by the thickened portion 212 in the first direction X may also be saved, which is conducive to reducing the difficulty of protrudingly providing the thickened portion 212 on the cavity wall surface of the accommodating cavity 211, and may reduce the interference influence between the thickened portion 212 and the first body region 2211a of the first electrode plate 221.

According to some embodiments of the present application, please continue to refer to FIG. 6, a thickness of the thickened portion 212 protruding from the cavity wall surface of the accommodating cavity 211 is D, which satisfies 0 mm < D ≤ 5 mm.

Here, the thickness D of the thickened portion 212 protruding from the cavity wall surface of the accommodating cavity 211 may be 0.1 mm, 0.2 mm, 0.5 mm, 0.8 mm, 1 mm, 1.2 mm, 1.5 mm, 1.8 mm, 2 mm, 2.5 mm, 3 mm, 3.5 mm, 4 mm, 4.5 mm, or 5 mm, or the like.

In this embodiment, by setting the thickness of the thickened portion 212 protruding from the cavity wall surface of the accommodating cavity 211 to be less than or equal to 5 mm, the phenomenon that the thickened portion 212 occupies too much internal space of the shell 21 is alleviated, thereby enabling improvement of the utilization rate of the internal space of the battery cell 20, so as to improve the energy density of the battery cell 20.

According to some embodiments of the present application, referring to FIG. 6, FIG. 7, and FIG. 8, the electrode assembly 22 further includes a second electrode plate 222. The second electrode plate 222 has a polarity opposite to that of the first electrode plate 221, the second electrode plate 222 includes a second body portion 2221 and a second tab 2222, the second body portion 2221 being formed with a second body region 2221a and a second thinned region 2221b arranged along the first direction X, where a thickness of the second thinned region 2221b is less than a thickness of the second body region 2221a, and along the first direction X, the second tab 2222 is connected to an end of the second thinned region 2221b away from the second body region 2221a, and the second tab 2222 and the first tab 2212 are located at the same end of the electrode assembly 22. Along a thickness direction of the second thinned region 2221b, at least a portion of a projection of the second thinned region 2221b is located within the thickened portion 212. The thickness direction of the second thinned region 2221b is perpendicular to the first direction X.

The second electrode plate 222 and the first electrode plate 221 have opposite polarities, i.e., the second electrode plate 222 and the first electrode plate 221 are respectively the positive and negative electrode plates of the electrode assembly 22.

Along the first direction X, the second tab 2222 and the first tab 2212 are located at the same end of the electrode assembly 22, that is to say, the second tab 2222 is connected to an end of the second body portion 2221 close to the first tab 2212 in the first direction X, such that the second tab 2222 is also connected, in the first direction X, to an end of the second body portion 2221 facing the end cover 214, that is, in the first direction X, the second tab 2222 is located between the second body portion 2221 and the end cover 214, so as to facilitate the electrical connection between the second tab 2222 and one electrode terminal 23 of the two electrode terminals 23.

The second body portion 2221 is formed with a second body region 2221a and a second thinned region 2221b arranged along the first direction X, where a thickness of the second thinned region 2221b is less than a thickness of the second body region 2221a, and the second tab 2222 is connected to an end of the second thinned region 2221b away from the second body region 2221a. That is to say, referring to FIG. 8, an end of the second body portion 2221 connected to the second tab 2222 in the first direction X is formed with a region where the active material layer is thinned. This region is the second thinned region 2221b of the second body portion 2221, while a region where the active material layer is not thinned is the second body region 2221a of the second body portion 2221, such that the thickness of the second body region 2221a is greater than the thickness of the second thinned region 2221b, and the second body region 2221a, the second thinned region 2221b, and the second tab 2222 are of a structure sequentially arranged along the first direction X.

Along a thickness direction of the second thinned region 2221b, at least a portion of a projection of the second thinned region 2221b is located within the thickened portion 212. That is to say, in the thickness direction of the second thinned region 2221b, the projection of the second thinned region 2221b at least partially overlaps with a projection of the thickened portion 212, such that the thickened portion 212 covers at least a portion of the second thinned region 2221b in the thickness direction of the second thinned region 2221b. That is to say, when the second thinned region 2221b of the second electrode plate 222 expands, the second thinned region 2221b may directly abut or indirectly abut against at least a portion of the thickened portion 212 in its thickness direction.

It should be noted that the thickness direction of the second thinned region 2221b is also the thickness direction of the second electrode plate 222. In the electrode assembly 22 of the stacked structure or the electrode assembly 22 of the wound structure, the first electrode plate 221 and the second electrode plate 222 are both of structures stacked with each other, such that the thickness direction of the second thinned region 2221b is consistent with the thickness direction of the first thinned region 2211b. If the electrode assembly 22 is of a stacked structure formed by alternately stacking the first electrode plate 221 and the second electrode plate 222 in sequence, the thickness direction of the second thinned region 2221b is a stacking direction of the first electrode plate 221 and the second electrode plate 222, and is also the thickness direction of the electrode assembly 22; if the electrode assembly 22 is of a wound structure formed by winding the first electrode plate 221 and the second electrode plate 222, the thickness of the second thinned region 2221b is a radial direction of the electrode assembly 22, i.e., in a plane perpendicular to the first direction X, a direction in which a winding central axis of the electrode assembly 22 points to an outer edge of the electrode assembly 22, or a direction in which the outer edge of the electrode assembly 22 points to the winding central axis of the electrode assembly 22.

In this embodiment, the second tab 2222 of the second electrode plate 222 of the electrode assembly 22 is connected to the end of the second thinned region 2221b of the second body portion 2221 away from the second body region 2221a, such that a thinned structure is also formed at an end of the second body portion 2221 of the second electrode plate 222 where the second tab 2222 is provided, thereby enabling alleviation of the phenomenon of stress concentration occurring at the end of the second body portion 2221 connected to the second tab 2222. Here, by arranging the second tab 2222 of the second electrode plate 222 and the first tab 2212 of the first electrode plate 221 at the same end of the electrode assembly 22 in the first direction X, and arranging at least a portion of the projection, in the thickness direction of the second thinned region 2221b, of the part of the second electrode plate 222 of the electrode assembly 22 forming the second thinned region 2221b to be located within the thickened portion 212, the shell 21 may also increase, through the thickened portion 212, the constraint and restriction on the second thinned region 2221b of the second electrode plate 222 of the electrode assembly 22, thereby enabling reduction in the expandable space of the second thinned region 2221b of the second electrode plate 222 during cyclic use, so as to effectively alleviate the phenomenon that the second thinned region 2221b of the second electrode plate 222 has an excessively large gap or the second electrode plate 222 is bent after expansion, and consequently enabling further alleviation of the phenomenon that the wetting effect of the electrolyte solution of the electrode assembly 22 becomes poor during later use, so as to further reduce the risk of lithium plating of the electrode assembly 22, and enabling further alleviation of the phenomenon that the internal resistance of the electrode assembly 22 becomes large during later use, which is conducive to further improving the service life and use reliability of the battery cell 20.

According to some embodiments of the present application, referring to FIG. 8, along the first direction X, at least one end of the thickened portion 212 extends beyond the second thinned region 2221b. That is to say, the thickened portion 212 may have only one end extending beyond the second thinned region 2221b in the first direction X, or both ends extending beyond the second thinned region 2221b in the first direction X.

If the thickened portion 212 is of a structure where only one end extends beyond the second thinned region 2221b in the first direction X, it may be that an end of the thickened portion 212 close to the opening 2111 in the first direction X extends beyond the second thinned region 2221b, or an end of the thickened portion 212 away from the opening 2111 in the first direction X extends beyond the second thinned region 2221b.

In this embodiment, by arranging at least one end of the thickened portion 212 in the first direction X to extend beyond the second thinned region 2221b of the second electrode plate 222, the abutting effect of the thickened portion 212 on the second thinned region 2221b is improved, thereby enabling improvement of the effect of the shell 21 constraining and restricting the second thinned region 2221b of the second electrode plate 222, so as to reduce the expandable space of the second thinned region 2221b of the second electrode plate 222 during cyclic use, and consequently enabling further alleviation of the phenomenon that the second thinned region 2221b of the second electrode plate 222 has an excessively large gap or the second electrode plate 222 is bent after expansion.

In some embodiments, please continue to refer to FIG. 8, along the first direction X, both ends of the thickened portion 212 extend beyond the second thinned region 2221b. That is to say, both ends of the second thinned region 2221b in the first direction X are located between both ends of the thickened portion 212 in the first direction X.

In this embodiment, by setting a structure in which both ends of the thickened portion 212 in the first direction X extend beyond the second thinned region 2221b of the second electrode plate 222, the abutment effect of the thickened portion 212 on the second thinned region 2221b is further improved, thereby enabling further improvement of the effect of the shell 21 constraining and restricting the second thinned region 2221b of the second electrode plate 222, so as to further reduce the expandable space of the second thinned region 2221b of the second electrode plate 222 during cyclic use, and consequently enabling further alleviation of the phenomenon that the second thinned region 2221b of the second electrode plate 222 has an excessively large gap or the second electrode plate 222 is bent after expansion.

According to some embodiments of the present application, please refer to FIG. 8, along the first direction X, the length of the thickened portion 212 is less than or equal to twice the length of the second thinned region 2221b.

In this embodiment, by setting the length of the thickened portion 212 in the first direction X to be less than or equal to twice the length of the second thinned region 2221b, while achieving the constraint and restriction on the second thinned region 2221b, the space occupied by the thickened portion 212 in the first direction X may also be saved, which is conducive to reducing the difficulty of protrudingly providing the thickened portion 212 on the cavity wall surface of the accommodating cavity 211, and may reduce the interference influence between the thickened portion 212 and the second body region 2221a of the second electrode plate 222.

According to some embodiments of the present application, referring to FIG. 6, FIG. 7, and FIG. 8, along the thickness direction of the first thinned region 2211b, the projections of the first thinned region 2211b and the second thinned region 2221b at least partially overlap. That is to say, in the thickness direction of the first thinned region 2211b, at least a portion of the first thinned region 2211b and the second thinned region 2221b are structures disposed opposite to each other.

As an example, in FIG. 8, the first electrode plate 221 is a negative electrode plate, and the second electrode plate 222 is a positive electrode plate. Along the first direction X, one end of the first thinned region 2211b is connected to the first body region 2211a, and one end of the second thinned region 2221b is connected to the second body region 2221a, while the end of the first thinned region 2211b away from the first body region 2211a in the first direction X extends beyond the end of the second thinned region 2221b away from the second body region 2221a in the first direction X, such that the projection, in the thickness direction of the first thinned region 2211b, of the end of the second thinned region 2221b away from the second body region 2221a in the first direction X is located within the first thinned region 2211b, and the projection, in the thickness direction of the first thinned region 2211b, of the end of the second thinned region 2221b connected to the second body region 2221a in the first direction X is located within the first body region 2211a, thereby reducing the risk of lithium plating of the electrode assembly 22.

In this embodiment, by arranging the first thinned region 2211b and the second thinned region 2221b such that the projections thereof in the thickness direction of the first thinned region 2211b at least partially overlap, the first thinned region 2211b and the second thinned region 2221b may share a portion of space in the first direction X, which, on one hand, enables saving the space occupied by the first thinned region 2211b and the second thinned region 2221b in the first direction X, thereby facilitating improvement of the energy density of the electrode assembly 22, and on the other hand, while achieving the configuration where both the first thinned region 2211b and the second thinned region 2221b are arranged corresponding to the thickened portion 212, also enables saving the dimension of the thickened portion 212 in the first direction X, so as to facilitate simultaneous constraint and restriction of the shell 21 on the first thinned region 2211b and the second thinned region 2221b through the thickened portion 212.

According to some embodiments of the present application, referring to FIG. 4, FIG. 5, FIG. 7, and FIG. 8, the electrode assembly 22 is formed with a flat region 224, and the electrode assembly 22 further includes a second electrode plate 222 having a polarity opposite to that of the first electrode plate 221. A portion of the first electrode plate 221 in the flat region 224 and a portion of the second electrode plate 222 in the flat region 224 are stacked along a second direction Y, and along the second direction Y, the shell 21 has a first wall 2132a provided opposite to the electrode assembly 22, a surface of the first wall 2132a facing the electrode assembly 22 being provided with the thickened portion 212, and the second direction Y being perpendicular to the first direction X.

The electrode assembly 22 is formed with the flat region 224, i.e., a region where the electrode assembly 22 is formed with a flat structure. As an example, in FIG. 7, the electrode assembly 22 is of a wound structure formed by stacking the first electrode plate 221 and the second electrode plate 222 with each other and winding them around an axis extending along the first direction X. Then, a middle portion of the electrode assembly 22 in the third direction Z forming a flat structure is the flat region 224, and the electrode assembly 22 is further formed with bending regions 225 respectively connected to two ends of the flat region 224 in the third direction Z, such that the portion of the first electrode plate 221 in the flat region 224 and the portion of the second electrode plate 222 in the flat region 224 are stacked along the second direction Y. Of course, in some embodiments, the electrode assembly 22 may also be of a stacked structure formed by alternately stacking the first electrode plate 221 and the second electrode plate 222 in sequence along the second direction Y. In such embodiments, the entirety of the electrode assembly 22 forms the flat region 224, i.e., the electrode assembly 22 is formed only with the flat region 224.

Along the second direction Y, the shell 21 has the first wall 2132a provided opposite to the electrode assembly 22. That is to say, the shell 21 includes at least one first wall 2132a in the second direction Y, and the first wall 2132a is located on one side of the electrode assembly 22 in the second direction Y.

The surface of the first wall 2132a facing the electrode assembly 22 is provided with the thickened portion 212. That is to say, at least one side of the electrode assembly 22 in the second direction Y or the thickness direction of the flat region 224 is provided with the thickened portion 212, such that the thickened portion 212 may constrain and restrict the electrode assembly 22 in the thickness direction of the flat region 224.

As an example, in FIG. 6 and FIG. 8, the shell 21 has two first walls 2132a provided opposite to each other in the second direction Y, and the two first walls 2132a are respectively located on two sides of the electrode assembly 22 in the second direction Y. In such embodiments, only one first wall 2132a of the two first walls 2132a may be provided with the thickened portion 212 on its surface facing the electrode assembly 22, or both of the two first walls 2132a may be provided with the thickened portion 212 on their surfaces facing the electrode assembly 22.

In this embodiment, the electrode assembly 22 is formed with a flat region 224, and the first electrode plate 221 and the second electrode plate 222 located in the flat region 224 are of a structure stacked along the second direction Y, such that the electrode assembly 22 is of a structure that expands relatively greatly in the second direction Y. Thus, by protrudingly providing the thickened portion 212 on the second wall 2132b of the shell 21 provided opposite to the electrode assembly 22 along the second direction Y, the shell 21 may be enabled to increase, through the thickened portion 212, the constraint and restriction on the first thinned region 2211b of the first electrode plate 221 in the second direction Y, and the battery cell 20 adopting such a structure may achieve the constraint and restriction, in the second direction Y, on the region of the first electrode plate 221 of the electrode assembly 22 formed with the weak structure, so as to reduce the expandable space, in the direction of relatively great expansion, of the region of the first electrode plate 221 of the electrode assembly 22 formed with the weak structure, thereby enabling alleviation of the phenomenon that the electrode assembly 22 has an excessively large gap or the first electrode plate 221 is bent after expansion, and consequently enabling reduction of the phenomenon that the wetting effect of the electrolyte solution of the electrode assembly 22 becomes poor during later use, so as to reduce the risk of lithium plating of the electrode assembly 22, and enabling alleviation of the phenomenon that the internal resistance of the electrode assembly 22 becomes large during later use.

In some embodiments, referring to FIG. 8, along the second direction Y, the projection of the first thinned region 2211b is entirely located within the thickened portion 212. That is to say, the thickened portion 212 covers the first thinned region 2211b of the first electrode plate 221 in the second direction Y.

In this embodiment, by arranging the projection of the first thinned region 2211b of the first electrode plate 221 in the second direction Y to be entirely located within the thickened portion 212, such that the thickened portion 212 is of a structure covering the first thinned region 2211b of the first electrode plate 221 in the second direction Y, the thickened portion 212 may be enabled to constrain and restrict the entirety of the weak structure formed on the first electrode plate 221 in the direction in which the electrode assembly 22 expands relatively greatly, so as to alleviate the phenomenon that the first thinned region 2211b of the first electrode plate 221 is bent and deformed or has an enlarged gap due to an excessive expansion space, which is conducive to further alleviating the phenomenon of poor wetting of the electrolyte solution of the electrode assembly 22 during use.

In some embodiments, please continue to refer to FIG. 8, the second electrode plate 222 includes a second body portion 2221 and a second tab 2222, the second body portion 2221 being formed with a second body region 2221a and a second thinned region 2221b arranged along the first direction X, where a thickness of the second thinned region 2221b is less than a thickness of the second body region 2221a, and along the first direction X, the second tab 2222 is connected to an end of the second thinned region 2221b away from the second body region 2221a, and the second tab 2222 and the first tab 2212 are located at the same end of the electrode assembly 22. Along the second direction, a projection of the second thinned region 2221b is entirely located within the thickened portion 212. That is to say, the thickened portion 212 covers the second thinned region 2221b of the second electrode plate 222 in the second direction Y.

It should be noted that, in embodiments where the first electrode plate 221 is formed with the first thinned region 2211b and the second electrode plate 222 is formed with the second thinned region 2221b, the projections of both the first thinned region 2211b of the first electrode plate 221 and the second thinned region 2221b of the second electrode plate 222 in the second direction Y are entirely located within the thickened portion 212.

In this embodiment, by arranging the projection of the second thinned region 2221b of the second electrode plate 222 in the second direction Y to be entirely located within the thickened portion 212, such that the thickened portion 212 is a structure covering the second thinned region 2221b of the second electrode plate 222 in the second direction Y, the thickened portion 212 may constrain and restrict the entirety of the weak structure formed on the second electrode plate 222 in the direction where the electrode assembly 22 expands relatively greatly, so as to alleviate the phenomenon that the second thinned region 2221b of the second electrode plate 222 is bent and deformed or has an enlarged gap due to an excessive expansion space, which is conducive to further alleviating the phenomenon of poor wetting of the electrolyte solution of the electrode assembly 22 during use.

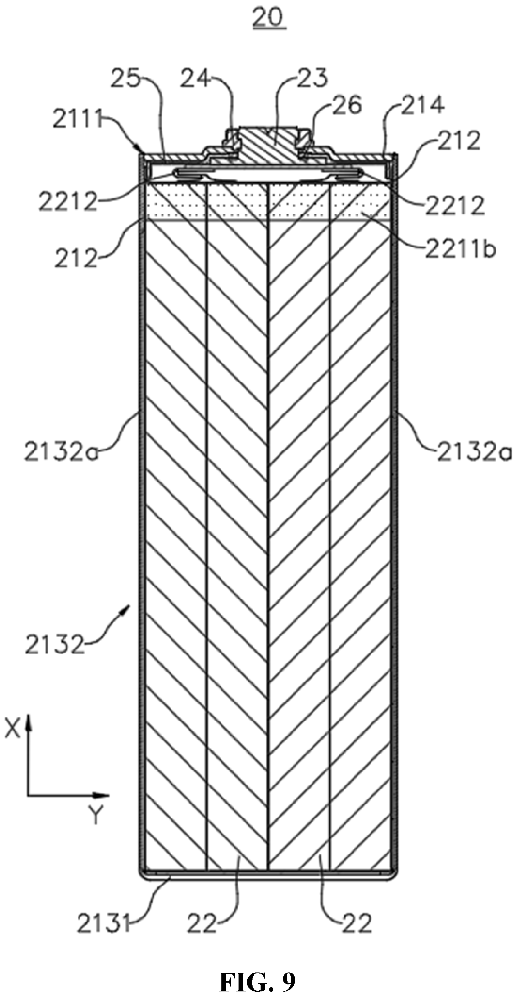

According to some embodiments of the present application, reference is made to FIG. 9. FIG. 9 is a cross-sectional diagram of the battery cell 20 according to still other embodiments of the present application. Along the second direction Y, the shell 21 has two first walls 2132a provided opposite to each other, the two first walls 2132a being respectively located on two sides of the electrode assembly 22, and surfaces of the two first walls 2132a facing the electrode assembly 22 are each provided with the thickened portion 212.

Here, along the second direction Y, the shell 21 has two first walls 2132a provided opposite to each other. That is to say, the shell 21 has two first walls 2132a in the second direction Y, and the two first walls 2132a are respectively located on two sides of the electrode assembly 22 in the second direction Y, i.e., the electrode assembly 22 is located between the two first walls 2132a in the second direction Y.

The surfaces of the two first walls 2132a facing the electrode assembly 22 are each provided with the thickened portion 212, i.e., the thickened portion 212 is protrudingly provided on the surfaces of the two first walls 2132a on the sides facing each other, such that the thickened portions 212 of the two first walls 2132a face each other in the second direction Y, such that the electrode assembly 22 is provided with the thickened portion 212 on both sides in the second direction Y.

In this embodiment, the shell 21 has two first walls 2132a provided opposite to each other in the second direction Y, the two first walls 2132a being respectively located on two sides of the electrode assembly 22, and surfaces of the sides of the two first walls 2132a facing the electrode assembly 22 are each provided with the thickened portion 212. The battery cell 20 adopting such a structure may achieve abutting, on two sides in the direction where the electrode assembly 22 expands relatively greatly, against the region of the first electrode plate 221 of the electrode assembly 22 formed with the weak structure, which is conducive to improving the effect of the shell 21 constraining and restricting, through the thickened portion 212, the region of the first electrode plate 221 of the electrode assembly 22 formed with the weak structure.

According to some embodiments of the present application, referring to FIG. 7, the electrode assembly 22 is a wound structure, and the first electrode plate 221 and the second electrode plate 222 are stacked with each other and wound around an axis extending along the first direction X, such that the electrode assembly 22 is formed with the flat region 224 and two bending regions 225 connected to two ends of the flat region 224 in a third direction Z, the first direction X, the second direction Y, and the third direction Z being mutually perpendicular.

In this embodiment, by configuring the electrode assembly 22 as a wound structure formed by winding the first electrode plate 221 and the second electrode plate 222 around the axis extending along the first direction X, the electrode assembly 22 is formed, between the two bending regions 225, with the flat region 224 where the first electrode plate 221 and the second electrode plate 222 are stacked with each other along the second direction Y. The structure is simple and facilitates manufacturing.

It should be noted that, in some embodiments, when the electrode assembly 22 is of the wound structure, the thickened portion 212 may also be of an annular structure, and the thickened portion 212 surrounds an outer side of the electrode assembly 22 around the axis extending along the first direction X. That is to say, in an embodiment where the thickened portion 212 is protrudingly provided on a surface of the side wall 2132 of the case 213 facing the electrode assembly 22, the thickened portion 212 is of an annular structure extending along a circumferential direction of the side wall 2132.

In this embodiment, by configuring the thickened portion 212 as an annular structure surrounding the outer side of the electrode assembly 22, the thickened portion 212 may not only constrain and restrict the first thinned region 2211b of the first electrode plate 221 in the flat region 224 of the electrode assembly 22, but also constrain and restrict the first thinned region 2211b of the first electrode plate 221 in the bending region 225 of the electrode assembly 22, which is conducive to further alleviating the phenomenon that the first thinned region 2211b of the first electrode plate 221 is bent and deformed or has an enlarged gap during use, so as to reduce the risk of poor wetting of the electrolyte solution of the electrode assembly 22 during use.

According to some embodiments of the present application, referring to FIG. 3, FIG. 4, FIG. 5, and FIG. 6, the shell 21 may include a case 213 and an end cover 214. The case 213 includes a bottom wall 2131 and a side wall 2132, the side wall 2132 being provided around a periphery of the bottom wall 2131, along the first direction X, one end of the side wall 2132 being connected to the bottom wall 2131, and the other end enclosing an opening 2111, and the side wall 2132 and the bottom wall 2131 jointly defining the accommodating cavity 211. The end cover 214 closes the opening 2111. The thickened portion 212 is provided on a surface of the side wall 2132 facing the electrode assembly 22.

As an example, the side wall 2132 and the bottom wall 2131 of the case 213 are of an integrally formed structure, i.e., the side wall 2132 and the bottom wall 2131 of the case 213 are of an integral structure. That is to say, the side wall 2132 and the bottom wall 2131 of the case 213 are formed by an integral forming process, for example, stamping, casting, or the like. Of course, in other embodiments, the side wall 2132 and the bottom wall 2131 of the case 213 may also be of separately provided structures, and the bottom wall 2131 and the side wall 2132 may be connected to each other by means of welding, bonding, or the like.

The end cover 214 closes the opening 2111, i.e., the end cover 214 is connected to the end of the case 213 provided with the opening 2111, and the end cover 214 covers the opening 2111.

In this embodiment, by arranging the opening 2111 of the case 213 to be located at one end of the case 213 in the first direction X, such that the end cover 214 and the bottom wall 2131 of the case 213 are structures arranged along the first direction X, and the thickened portion 212 is provided on the surface of the side wall 2132 facing the electrode assembly 22, on one hand, it is made convenient to assemble the electrode assembly 22 into the case 213 along the first direction X, so as to achieve the corresponding arrangement of the thickened portion 212 protrudingly provided on the side wall 2132 and the thinned region of the first electrode plate 221, which is conducive to reducing the assembly difficulty of the battery cell 20, and on the other hand, it is made possible to reduce the difficulty of protrudingly providing the thickened portion 212 on the cavity wall surface of the accommodating cavity 211 of the shell 21.

In some embodiments, please continue to refer to FIG. 3, FIG. 4, FIG. 5, and FIG. 6, the side wall 2132 includes two first walls 2132a and two second walls 2132b, the two first walls 2132a being provided opposite to each other along a second direction Y, the two second walls 2132b being provided opposite to each other along a third direction Z, and one of the first walls 2132a, one of the second walls 2132b, the other of the first walls 2132a, and the other of the second walls 2132b being sequentially connected end to end, with the first direction X, the second direction Y, and the third direction Z being mutually perpendicular. An area of a surface of the first wall 2132a facing away from the electrode assembly 22 is the largest among outer surfaces of the battery cell 20, and a surface of the first wall 2132a facing the electrode assembly 22 is provided with the thickened portion 212.

The side wall 2132 includes two first walls 2132a and two second walls 2132b, the two first walls 2132a being provided opposite to each other along the second direction Y, and the two second walls 2132b being provided opposite to each other along the third direction Z. That is to say, the side wall 2132 of the case 213 is of a rectangular parallelepiped structure, such that the side wall 2132 has two first walls 2132a opposite to each other in the second direction Y, and the side wall 2132 has two second walls 2132b opposite to each other in the third direction Z.

The area of the surface of the first wall 2132a facing away from the electrode assembly 22 is the largest among the outer surfaces of the battery cell 20. That is to say, the surface of the first wall 2132a on the side facing away from the electrode assembly 22 is a large surface of the shell 21 of the battery cell 20. Similarly, the thickness direction of the first wall 2132a is the thickness direction of the battery cell 20, i.e., the thickness direction of the battery cell 20 is the second direction Y.

In this embodiment, the side wall 2132 of the case 213 includes two first walls 2132a provided opposite to each other along the second direction Y and two second walls 2132b provided opposite to each other along the third direction Z, such that the side wall 2132 is of a rectangular parallelepiped structure. By providing the thickened portion 212 on the surface of the first wall 2132a facing the electrode assembly 22, and configuring the outer surface of the first wall 2132a facing away from the electrode assembly 22 to be the largest among the outer surfaces of the battery cell 20, the thickened portion 212 is located on a side of the electrode assembly 22 in the thickness direction of the battery cell 20. The battery cell 20 adopting such a structure may achieve the constraint and restriction, in the direction of relatively great expansion, on the region of the first electrode plate 221 of the electrode assembly 22 formed with the weak structure, thereby enabling alleviation of the phenomenon that the electrode assembly 22 has an excessively large gap or the first electrode plate 221 is bent after expansion, and consequently enabling reduction of the phenomenon that the wetting effect of the electrolyte solution of the electrode assembly 22 becomes poor during later use, so as to reduce the risk of lithium plating of the electrode assembly 22, and enabling alleviation of the phenomenon that the internal resistance of the electrode assembly 22 becomes large during later use.

According to some embodiments of the present application, referring to FIG. 7, the first electrode plate 221 is a negative electrode plate of the electrode assembly 22, and correspondingly, the second electrode plate 222 is a positive electrode plate. Of course, in other embodiments, the first electrode plate 221 may also be a positive electrode plate, and correspondingly, the second electrode plate 222 is a negative electrode plate.

As an example, in FIG. 7, the first electrode plate 221 is a negative electrode plate, and the outermost electrode plate of the electrode assembly 22 is the first electrode plate 221.

In this embodiment, by configuring the first electrode plate 221 as the negative electrode plate of the electrode assembly 22, the outermost side of the electrode assembly 22 is the first electrode plate 221, thereby enabling the constraint and restriction, through the thickened portion 212, on the first thinned region 2211b of the first electrode plate 221 of the electrode assembly 22 which is most prone to deformation, so as to alleviate the phenomenon that the wetting effect of the electrolyte solution of the electrode assembly 22 becomes poor during later use, thereby enabling reduction in the risk of lithium plating of the electrode assembly 22, and enabling alleviation of the phenomenon that the internal resistance of the electrode assembly 22 becomes large during later use.

According to some embodiments of the present application, referring to FIG. 5 and

FIG. 6, the thickened portion 212 is integrally formed with the shell 21. That is, the thickened portion 212 and the shell 21 are of an integral structure, such that the thickened portion 212 and the shell 21 are structures made by an integral forming process, for example, stamping, casting, milling, or the like.

In this embodiment, by configuring the thickened portion 212 and the shell 21 as an integrally formed structure, it is made conducive to improving the connection strength between the thickened portion 212 and the shell 21, thereby enabling improvement of the stability and reliability of protruding provision of the thickened portion 212 on the cavity wall surface of the accommodating cavity 211, so as to reduce the risk of the thickened portion 212 falling off during use, which is conducive to improving the use reliability and stability of the battery cell 20.

Of course, the structure of the battery cell 20 is not limited to this. In some embodiments, the battery cell 20 may also be of other structures, for example, the thickened portion 212 and the shell 21 are separately provided and connected.

Here, the thickened portion 212 may be connected to the cavity wall surface of the accommodating cavity 211 of the shell 21 by means of bonding, welding, or snap-fitting, or the like.

In this embodiment, by configuring the thickened portion 212 and the shell 21 as separately provided structures, and configuring the thickened portion 212 to be connected to the cavity wall surface of the accommodating cavity 211, in the battery cell 20 adopting such a structure, it is made convenient to provide the thickened portion 212 on the cavity wall surface of the accommodating cavity 211, which is conducive to reducing the difficulty of protrudingly providing the thickened portion 212 on the cavity wall surface of the accommodating cavity 211, and facilitates replacing the thickened portion 212 of different thicknesses.

In some embodiments, a cavity may also be formed inside the thickened portion 212. That is to say, the thickened portion 212 is of a hollow structure.

It should be noted that, in the embodiments where the cavity is formed inside the thickened portion 212, a support structure such as a reinforcing rib or a reinforcing bar, or the like may also be provided inside the cavity of the thickened portion 212, so as to improve the structural strength and deformation resistance of the thickened portion 212.

In this embodiment, by providing a cavity inside the thickened portion 212, the weight of the thickened portion 212 may be reduced, so as to reduce the overall weight of the battery cell 20, which is conducive to improving the energy density of the battery cell 20.

According to some embodiments of the present application, the present application further provides a battery 100, the battery 100 including the battery cell 20 according to any one of the above solutions.

Referring to FIG. 2, the battery 100 may further include a box 10, and the battery cell 20 is accommodated within the box 10.

In some embodiments, the box 10 includes a first box body 11 and a second box body 12. The first box body 11 and the second box body 12 cover each other, and the first box body 11 and the second box body 12 together define an assembly space for accommodating the battery cell 20.

Optionally, the second box body 12 may be of a hollow structure with an open end, the first box body 11 may be of a plate-shaped structure, and the first box body 11 covers the open side of the second box body 12, such that the first box body 11 and the second box body 12 together define the assembly space. Each of the first box body 11 and the second box body 12 may also be of a hollow structure with an open side, and the open side of the first box body 11 covers the open side of the second box body 12.

Of course, the box 10 formed by the first box body 11 and the second box body 12 may be in various shapes, such as a cylinder or a cuboid. As an example, in FIG. 2, the box 10 is of a cuboid structure.

Optionally, one battery cell 20 or a plurality of battery cells 20 may be arranged in the box 10. As an example, in FIG. 2, a plurality of battery cells 20 are arranged in the box 10 of the battery 100, and the plurality of battery cells 20 may be connected in series, parallel or series and parallel, where the series-parallel connection means that some of the plurality of battery cells 20 are connected in series and some are connected in parallel. The plurality of battery cells 20 may be directly connected in series, parallel or series and parallel together, and then, the whole formed by the plurality of battery cells 20 is accommodated within the box 10. Of course, the battery 100 may also be in the form of a battery module composed of a plurality of battery cells 20 in series, parallel or series and parallel first, and then, a plurality of battery modules are connected in series, parallel or series and parallel to form a whole which is accommodated within the box 10.

The battery 100 may further include other structures. For example, the battery 100 may further include a convergence component, and the plurality of battery cells 20 may be connected through the convergence component so as to achieve electrical connection between the plurality of battery cells 20.

It should be noted that in some embodiments, the battery 100 may not be provided with a box 10. The battery 100 includes a plurality of battery cells 20, and the battery 100 composed of the plurality of battery cells 20 may be directly assembled on an electrical apparatus to provide electric energy to the electrical apparatus through the plurality of battery cells 20. In other words, the box 10 may be used as a part of the electrical apparatus. The electrical apparatus is, for example, a vehicle 1000, and the box 10 may be used as a part of a chassis structure of the vehicle 1000. For example, a part of the box 10 may become at least a portion of a floor of the vehicle 1000, or a part of the box 10 may become at least a portion of a cross beam and a longitudinal beam of the vehicle 1000.

According to some embodiments of the present application, the present application also provides an electrical apparatus, the electrical apparatus including the battery cell 20 according to any one of the above solutions, and the battery cell 20 being used for providing electric energy for the electrical apparatus.

The electrical apparatus may be any one of the aforementioned devices or systems in which the battery cell 20 is applied.

According to some embodiments of the present application, referring to FIG. 3 to FIG. 8, the present application provides a battery cell 20, the battery cell 20 including a shell 21, an electrode assembly 22, and two electrode terminals 23. The shell 21 includes a case 213 and an end cover 214. The case 213 includes a bottom wall 2131 and a side wall 2132, the side wall 2132 being provided around a periphery of the bottom wall 2131, along the first direction X, one end of the side wall 2132 being connected to the bottom wall 2131, and the other end enclosing an opening 2111, the side wall 2132 and the bottom wall 2131 jointly defining the accommodating cavity 211, and the end cover 214 closing the opening 2111. The side wall 2132 includes two first walls 2132a and two second walls 2132b, the two first walls 2132a being provided opposite to each other along a second direction Y, the two second walls 2132b being provided opposite to each other along a third direction Z, and one of the first walls 2132a, one of the second walls 2132b, the other of the first walls 2132a, and the other of the second walls 2132b being sequentially connected end to end, with the first direction X, the second direction Y, and the third direction Z being mutually perpendicular. An area of a surface of the first wall 2132a facing away from the electrode assembly 22 is the largest among outer surfaces of the battery cell 20. The electrode assembly 22 is accommodated within the accommodating cavity 211, and the electrode assembly 22 includes a first electrode plate 221, a second electrode plate 222, and a separator 223. The first electrode plate 221 and the second electrode plate 222 have opposite polarities, where the first electrode plate 221 is a negative electrode plate, and the second electrode plate 222 is a positive electrode plate. The separator 223 is disposed between the first electrode plate 221 and the second electrode plate 222, so as to insulatingly separate the first electrode plate 221 and the second electrode plate 222. The first electrode plate 221, the second electrode plate 222, and the separator 223 are wound to form the electrode assembly 22 of the wound structure, such that the electrode assembly 22 is formed with a flat region 224 and two bending regions 225 connected to two ends of the flat region 224 in the third direction Z, and a portion of the first electrode plate 221 in the flat region 224 and a portion of the second electrode plate 222 in the flat region 224 are stacked along the second direction Y. The first electrode plate 221 includes a first body portion 2211 and a first tab 2212, the first body portion 2211 being formed with a first body region 2211a and a first thinned region 2211b arranged along a first direction X, where a thickness of the first thinned region 2211b is less than a thickness of the first body region 2211a, and the first tab 2212 is connected to an end of the first thinned region 2211b away from the first body region 2211a in the first direction X. The second electrode plate 222 includes a second body portion 2221 and a second tab 2222, the second body portion 2221 being formed with a second body region 2221a and a second thinned region 2221b arranged along the first direction X, where a thickness of the second thinned region 2221b is less than a thickness of the second body region 2221a, and along the first direction X, the second tab 2222 is connected to an end of the second thinned region 2221b away from the second body region 2221a, and the second tab 2222 and the first tab 2212 are located at the same end of the electrode assembly 22. The two electrode terminals 23 are both disposed on the end cover 214, where one electrode terminal 23 of the two electrode terminals 23 is electrically connected to the first tab 2212, and the other electrode terminal 23 is electrically connected to the second tab 2222, so as to input or output the electric energy of the battery cell 20. A thickened portion 212 is protrudingly provided on a surface of the first wall 2132a facing the electrode assembly 22, and the thickened portion 212 is integrally formed with the shell 21. Along the second direction Y, a projection of the first thinned region 2211b is entirely located within the thickened portion 212, and a projection of the second thinned region 2221b is entirely located within the thickened portion 212. Along the first direction X, both ends of the thickened portion 212 extend beyond the first thinned region 2211b and the second thinned region 2221b, a length of the thickened portion 212 is less than or equal to twice a length of the first thinned region 2211b, and the length of the thickened portion 212 is less than or equal to twice a length of the second thinned region 2221b. A thickness of the thickened portion 212 protruding from the surface of the first wall 2132a facing the electrode assembly 22 is D, which satisfies 0 mm < D ≤ 5 mm.

It should be noted that the embodiments in the present application and features in the embodiments may be mutually combined without conflicts.

The above descriptions are merely preferred embodiments of the present application and are not intended to limit the present application. For those skilled in the art, the present application may have various modifications and changes. Any modification, equivalent replacement, improvement, or the like, made within the spirit and principle of the present application shall fall within the scope of protection of the present application.

## Claims

1. A battery cell, comprising:
a shell, an accommodating cavity being formed inside the shell; and
an electrode assembly accommodated within the accommodating cavity, the electrode assembly comprising a first electrode plate, wherein the first electrode plate comprises a first body portion and a first tab, the first body portion being formed with a first body region and a first thinned region arranged along a first direction, wherein a thickness of the first thinned region is less than a thickness of the first body region, and the first tab is connected to an end of the first thinned region away from the first body region in the first direction,
wherein a thickened portion is protrudingly provided on a cavity wall surface of the accommodating cavity, along a thickness direction of the first thinned region, at least a portion of a projection of the first thinned region being located within the thickened portion, and the thickness direction of the first thinned region being perpendicular to the first direction.

2. The battery cell according to claim 1, wherein along the first direction, at least one end of the thickened portion extends beyond the first thinned region.

3. The battery cell according to claim 2, wherein along the first direction, both ends of the thickened portion extend beyond the first thinned region.

4. The battery cell according to any one of claims 1 to 3, wherein along the first direction, a length of the thickened portion is less than or equal to twice a length of the first thinned region.

5. The battery cell according to any one of claims 1 to 4, wherein a thickness of the thickened portion protruding from the cavity wall surface of the accommodating cavity is D, which satisfies 0 mm < D ≤ 5 mm.

6. The battery cell according to any one of claims 1 to 5, wherein the electrode assembly further comprises:
a second electrode plate having a polarity opposite to that of the first electrode plate, wherein the second electrode plate comprises a second body portion and a second tab, the second body portion being formed with a second body region and a second thinned region arranged along the first direction, wherein a thickness of the second thinned region is less than a thickness of the second body region, and along the first direction, the second tab is connected to an end of the second thinned region away from the second body region, and the second tab and the first tab are located at the same end of the electrode assembly,
wherein along a thickness direction of the second thinned region, at least a portion of a projection of the second thinned region is located within the thickened portion, the thickness direction of the second thinned region being perpendicular to the first direction.

7. The battery cell according to claim 6, wherein along the first direction, at least one end of the thickened portion extends beyond the second thinned region.

8. The battery cell according to claim 7, wherein along the first direction, both ends of the thickened portion extend beyond the second thinned region.

9. The battery cell according to any one of claims 6 to 8, wherein along the first direction, a length of the thickened portion is less than or equal to twice a length of the second thinned region.

10. The battery cell according to any one of claims 6 to 9, wherein along the thickness direction of the first thinned region, the projections of the first thinned region and the second thinned region at least partially overlap.

11. The battery cell according to any one of claims 1 to 10, wherein the electrode assembly is formed with a flat region, and the electrode assembly further comprises a second electrode plate having a polarity opposite to that of the first electrode plate,
wherein a portion of the first electrode plate in the flat region and a portion of the second electrode plate in the flat region are stacked along a second direction, and along the second direction, the shell has a first wall provided opposite to the electrode assembly, a surface of the first wall facing the electrode assembly being provided with the thickened portion, and the second direction being perpendicular to the first direction.

12. The battery cell according to claim 11, wherein along the second direction, a projection of the first thinned region is entirely located within the thickened portion.

13. The battery cell according to claim 11 or 12, wherein the second electrode plate comprises a second body portion and a second tab, the second body portion being formed with a second body region and a second thinned region arranged along the first direction, wherein a thickness of the second thinned region is less than a thickness of the second body region, and along the first direction, the second tab is connected to an end of the second thinned region away from the second body region, and the second tab and the first tab are located at the same end of the electrode assembly,
wherein along the second direction, a projection of the second thinned region is entirely located within the thickened portion.

14. The battery cell according to any one of claims 11 to 13, wherein along the second direction, the shell has two said first walls provided opposite to each other, the two first walls being respectively located on two sides of the electrode assembly, and surfaces of the two first walls facing the electrode assembly are each provided with the thickened portion.

15. The battery cell according to any one of claims 11 to 14, wherein the electrode assembly is a wound structure, and the first electrode plate and the second electrode plate are stacked with each other and wound around an axis extending along the first direction, such that the electrode assembly is formed with the flat region and two bending regions connected to two ends of the flat region in a third direction, the first direction, the second direction, and the third direction being mutually perpendicular.

16. The battery cell according to claim 15, wherein the thickened portion is of an annular structure, and the thickened portion surrounds an outer side of the electrode assembly around the axis extending along the first direction.

17. The battery cell according to any one of claims 1 to 16, wherein the shell comprises:
a case comprising a bottom wall and a side wall, the side wall being provided around a periphery of the bottom wall, along the first direction, one end of the side wall being connected to the bottom wall, and the other end enclosing an opening, and the side wall and the bottom wall jointly defining the accommodating cavity; and
an end cover for closing the opening,
wherein the thickened portion is provided on a surface of the side wall facing the electrode assembly.

18. The battery cell according to claim 17, wherein the side wall comprises two first walls and two second walls, the two first walls being provided opposite to each other along a second direction, the two second walls being provided opposite to each other along a third direction, and one of the first walls, one of the second walls, the other of the first walls, and the other of the second walls being sequentially connected end to end, with the first direction, the second direction, and the third direction being mutually perpendicular,
wherein an area of a surface of the first wall facing away from the electrode assembly is the largest among outer surfaces of the battery cell, and a surface of the first wall facing the electrode assembly is provided with the thickened portion.

19. The battery cell according to any one of claims 1 to 18, wherein the first electrode plate is a negative electrode plate of the electrode assembly.

20. The battery cell according to any one of claims 1 to 19, wherein the thickened portion is integrally formed with the shell.

21. The battery cell according to any one of claims 1 to 19, wherein the thickened portion and the shell are separately provided and connected.

22. The battery cell according to any one of claims 1 to 21, wherein a cavity is formed inside the thickened portion.

23. A battery, comprising the battery cell according to any one of claims 1 to 22.

24. An electrical apparatus, comprising the battery cell according to any one of claims 1 to 22, the battery cell being used for providing electric energy.
